(19) Europäisches Patentamt / European Patent Office / Office européen des brevets

(11) **EP 3 689 696 B1**

(12) **EUROPEAN PATENT SPECIFICATION**

(45) Date of publication and mention
of the grant of the patent:
**15.11.2023  Bulletin 2023/46**

(21) Application number: **18862979.4**

(22) Date of filing: **20.09.2018**

(51) International Patent Classification (IPC):
*B60W 30/16* (2020.01)    *B60W 50/14* (2020.01)
*B60W 30/095* (2012.01)

(52) Cooperative Patent Classification (CPC):
**B60W 30/16; B60W 30/095; B60W 50/14;**
B60T 2201/022; B60W 2050/143; B60W 2540/30;
B60W 2554/4042; B60W 2554/4044;
B60W 2554/804; B60W 2556/10; B60W 2710/18;
B60W 2710/20

(86) International application number:
**PCT/CN2018/106632**

(87) International publication number:
**WO 2019/062630 (04.04.2019 Gazette 2019/14)**

(54) **FORWARD COLLISION AVOIDANCE METHOD FOR VEHICLE**

VERFAHREN ZUR FRONTALKOLLISIONSVERMEIDUNG FÜR FAHRZEUGE

PROCÉDÉ D'ÉVITEMENT DE COLLISION AVANT DESTINÉS À UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **30.09.2017   CN 201710944865**

(43) Date of publication of application:
**05.08.2020   Bulletin 2020/32**

(73) Proprietor: **NIO (Anhui) Holding Co., Ltd.
Hefei City, Anhui Province (CN)**

(72) Inventor: **SUN, Peng
Shanghai (CN)**

(74) Representative: **Vossius & Partner
Patentanwälte Rechtsanwälte mbB
Siebertstrasse 3
81675 München (DE)**

(56) References cited:
**EP-A2- 1 418 104          WO-A1-2017/125234
CN-A- 104 299 449       CN-A- 106 114 504
CN-A- 106 314 430       CN-A- 106 379 316
CN-A- 106 843 231       US-A- 5 332 057
US-A1- 2011 015 818   US-A1- 2015 012 204
US-A1- 2015 232 090   US-B1- 7 124 027
US-B2- 7 100 726**

**Description**

**Field of the Invention**

The present invention relates to a collision avoidance method in the field of traffic, in particular to a forward collision avoidance method and system of a vehicle.

**Background of the Invention**

About 90% of traffic accidents are caused by the inattention of drivers, and forward collision warning (FCW, Forward Collision Warning) or active collision avoidance of vehicles based on collision avoidance strategies can effectively reduce or avoid the occurrence of such accidents. The advantages and disadvantages of the forward collision warning strategy or the active collision avoidance strategy not only affect the safety performance of the vehicles, but also affect the driving experience, for example, an improper forward collision warning strategy or active collision avoidance strategy can cause excessive interference to the drivers.

The existing forward collision warning strategy only considers the longitudinal braking of the vehicle to avoid collision. The warning logic is as follows: by default, the vehicle adopts braking measures after the warning is issued, and the moment of issuing the warning needs to be judged according to the relative speed and distance between the vehicle and a front obstacle. In order to successfully avoid collision, it is necessary to reserve an enough time for the driver, so that the driver has an enough reaction time to complete a braking action, and the collision can be successfully avoided after the braking. Therefore, when the distance therebetween is within a certain set value, an alarm is triggered to remind the driver to brake.

EP 1 418 104 A2 discloses a device for controlling a braking force of a vehicle. The device comprises a braking force boosting control portion that increases the braking force in response to a detection of a possibility of a collision with an obstacle in the driving course of the vehicle; and a boost-reducing control portion that controls the boosting control portion so as to reduce the braking force when steering operation is executed by a driver of the vehicle as compared to a braking force to be generated when no steering operation is executed. The braking forces on individual wheels are reduced depending upon the lateral force on the corresponding wheel.

The existing active collision avoidance strategy only considers the longitudinal braking to avoid collision, a processor reads the position, distance, relative speed and relative acceleration of a front vehicle from a sensor (such as a camera, a millimeter wave radar, or a laser radar), and when the processor judges that there is a risk of collision and it is necessary to activate the maximum braking capacity of the vehicle, the processor sends an instruction to a braking actuator to achieve the purpose of emergency braking and deceleration of the vehicle.

During the actual use of the above method of formulating the collision warning strategy or the active collision avoidance strategy only from the longitudinal braking of the vehicle to avoid collision, warning or braking is too frequent, which will cause excessive interference to the driver, and the braking strategy is relatively conservative, so that the collision cannot be avoided to the greatest extent.

**Summary of the Invention**

The main purpose of the present invention is to overcome the shortcomings of the existing forward collision warning method, and to provide a new forward collision avoidance method and system of a vehicle. The technical problem to be solved is to reduce redundant warning or redundant active collision avoidance operations, thereby reducing the interference to the driver and improving the driving experience.

The subject-matter of the present invention is defined by the features of independent claim 1. Further preferred embodiments of the present invention are defined in the dependent claims. In particular, a purpose of the present invention and the technical problem to be solved are implemented by the following technical solutions. A forward collision avoidance method of a vehicle is proposed according to the present invention, wherein the speed of the vehicle is greater than the speed of a front obstacle, and the method includes: determining the current speed of the vehicle and defining the same as a first speed, and determining the current speed of the front obstacle and defining the same as a second speed; determining a collision avoidance manner to be adopted by the vehicle, wherein the collision avoidance manner includes single braking collision avoidance, single steering collision avoidance, or a combination of braking collision avoidance and steering collision avoidance; performing calculation according to the first speed, the second speed and the determined collision avoidance manner through a set operational formula to obtain a collision avoidance distance corresponding to the determined collision avoidance manner; determining the current distance between the vehicle and the front obstacle; and judging whether the current distance reaches the collision avoidance distance, and if the judgment result is yes, judging that a collision avoidance condition is tenable. Collision avoidance distances corresponding to the single braking collision avoidance and the single steering collision avoidance are respectively defined as a first collision avoidance distance and a second collision avoidance distance; and performing calculation through the set operational formula to obtain the collision avoidance distance corresponding to the determined collision avoidance manner includes:

when it is determined that the collision avoidance manner to be adopted is the combination of braking collision avoidance and steering collision avoidance, and
when the first speed is less than or equal to a set speed, determining the collision avoidance distance corresponding to the collision avoidance manner as the smaller one of the first collision avoidance distance and the second collision avoidance distance; and
when the first speed is greater than the set speed, determining the collision avoidance distance corresponding to the collision avoidance manner as the greater one of the first collision avoidance distance and the second collision avoidance distance.

The purpose of the present invention and the technical problem to be solved can also be further implemented by the following technical measures.

The foregoing forward collision avoidance method of the vehicle further includes: pre-storing different set speed intervals, wherein each of the set speed intervals corresponds to a collision avoidance manner; and the determining the collision avoidance manner to be adopted by the vehicle includes: judging the set speed interval into which the first speed falls, and determining the obtained collision avoidance manner corresponding to the first speed as the collision avoidance manner to be adopted by the vehicle.

According to the foregoing forward collision avoidance method of the vehicle, wherein the determining the collision avoidance manner to be adopted by the vehicle includes: obtaining historical collision avoidance manners adopted by the driver in past collision avoidance behaviors, and the speeds of the vehicle corresponding to the past collision avoidance behaviors; obtaining the historical collision avoidance manner of the driver at the same speed as the first speed among the past collision avoidance behaviors; estimating an estimated collision avoidance manner to be adopted by the driver at the first speed according to the obtained historical collision avoidance manner; and determining the estimated collision avoidance manner as the collision avoidance manner to be adopted by the vehicle.

The foregoing forward collision avoidance method of the vehicle further includes: storing a critical speed, wherein the critical speed is the relative speed between the vehicle and the front obstacle, when the collision avoidance distances of the single braking collision avoidance and the single steering collision avoidance are equal; wherein the determining the collision avoidance manner to be adopted by the vehicle includes: obtaining the critical speed; and if the determined current relative speed is less than the critical speed, determining the collision avoidance manner to be adopted by the vehicle as the braking collision avoidance, and if the determined current relative speed is greater than or equal to the critical speed, determining the collision avoidance manner to be adopted by the vehicle as the steering collision avoidance.

The foregoing forward collision avoidance method of the vehicle further includes: when the collision avoidance condition is tenable, generating and sending a warning signal to the driver to remind the driver to take collision avoidance measures.

According to the foregoing forward collision avoidance method of the vehicle, the reaction time of the driver is considered when the collision avoidance distance is calculated.

According to the foregoing forward collision avoidance method of the vehicle, in the case of braking collision avoidance, when the front obstacle is not in a preset working condition: when the collision avoidance distance is calculated, the distance change between the vehicle and the front obstacle is reckoned in the reaction time of the driver, wherein the preset working condition is that the front obstacle is in a decelerating state and stops before the vehicle.

The foregoing forward collision avoidance method of the vehicle further includes: determining the relative acceleration between the vehicle and the obstacle; wherein the collision avoidance distance is not less than a value obtained by a first calculation formula, the first calculation formula is: $\frac{-(v_{rel}+a_{rel}T_d)^2}{2a_{x,sv}} - T_d v_{rel} - \frac{1}{2}a_{rel}T_d^{\,2}$ , wherein, $v_{rel}$ represents the relative speed between the vehicle and the front obstacle, $a_{rel}$ represents the relative acceleration, $a_{x,sv}$ represents a preset braking longitudinal deceleration of the vehicle, and $T_d$ represents the reaction time of the driver.

The foregoing forward collision avoidance method of the vehicle further includes: determining the longitudinal acceleration of the front obstacle; and judging whether a first relational expression is tenable, wherein the first relational expression is: $T_d - \frac{v_{sv}}{a_{x,sv}} < \frac{-v_{pov}}{a_{x,pov}}$ , $v_{sv}$ represents the first speed, $v_{pov}$ represents the second speed, $a_{x,sv}$ represents the preset braking longitudinal deceleration of the vehicle, $a_{x,pov}$ represents the longitudinal acceleration of the front obstacle, $T_d$ represents the reaction time of the driver, and if the judgment result is yes, judging that the front obstacle is not in the preset working condition.

The foregoing forward collision avoidance method of the vehicle further includes: determining the longitudinal acceleration of the front obstacle; and in the case of braking collision avoidance, when the front obstacle is in the preset working condition: when the collision avoidance distance is calculated, reckoning in an estimated displacement of the front obstacle, obtained from the second speed and the longitudinal acceleration of the front obstacle, wherein the preset working condition is that the front obstacle is in the decelerating state and stops before the vehicle.

According to the foregoing forward collision avoidance method of the vehicle, wherein the collision avoidance distance is not less than a value obtained by a second calculation formula, the second calculation formula is:

$$\frac{-v_{sv}^2}{2a_{x,sv}} + \frac{v_{pov}^2}{2a_{x,pov}} - T_d v_{rel}$$

, wherein, $v_{sv}$ represents the first speed, $v_{pov}$ represents the second speed, $a_{x,sv}$ represents the preset braking longitudinal deceleration of the vehicle, $a_{x,pov}$ represents the longitudinal acceleration of the front obstacle, $v_{rel}$ represents the relative speed between the vehicle and the front obstacle, and $T_d$ represents the reaction time of the driver.

The foregoing forward collision avoidance method of the vehicle further includes: judging whether a second relational expression is tenable, wherein the second relational expression is:

$$T_d - \frac{v_{sv}}{a_{x,sv}} \geq \frac{-v_{pov}}{a_{x,pov}}$$

, $v_{sv}$ represents the first speed, $v_{pov}$ represents the second speed, $a_{x,sv}$ represents the preset braking longitudinal deceleration of the vehicle, $a_{x,pov}$ represents the longitudinal acceleration of the front obstacle, $T_d$ represents the reaction time of the driver, and if the judgment result is yes, judging that the front obstacle is in the preset working condition.

According to the foregoing forward collision avoidance method of the vehicle, in the case of steering collision avoidance, when the front obstacle is not in the preset working condition: when the collision avoidance distance is calculated, the distance change between the vehicle and the front obstacle is reckoned in the reaction time of the driver, wherein the preset working condition is that the front obstacle is in the decelerating state and stops before the vehicle.

Compared with the prior art, the present invention has obvious advantages and beneficial effects. By means of the above technical solutions, the forward collision avoidance method and system of the vehicle proposed by the present invention can achieve considerable technological advancement and practicability, have wide industrial utilization values, and at least have the following advantages:

1. The present invention achieves forward collision avoidance by integrating braking and steering and adopts different forward collision avoidance strategies at different current speeds and different current relative speeds of the vehicle; and when the collision avoidance distance is taken as the smaller one of the warning distance obtained by singly considering braking and the warning distance obtained by singly considering steering, the warning frequency or braking frequency can be effectively reduced without reducing the safety performance, the interference to the driver caused by excessive warning or braking is reduced, and thus the present invention is more suitable for practical use;

2. the present invention achieves forward collision avoidance by integrating braking and steering, when the collision avoidance distance is taken as the greater one of the warning distance obtained by singly considering braking and the warning distance obtained by singly considering steering, the safety performance of the vehicle can be effectively improved, and traffic accidents can be reduced or avoided;

3. the present invention determines whether the collision avoidance manner is braking, steering, or the combination of the two manners in various ways, which can better conform to the driving habits of the driver or can actively control the vehicle to make better choices, and can greatly enhance its overall effectiveness;

4. the present invention considers the influence of factors, such as the relative acceleration, the working condition whether the front obstacle is decelerating and stops before the vehicle, on the collision avoidance distance, so that the the collision avoidance distance can be calculated more accurately; and

5. by setting multiple or multilevel collision avoidance distances, the present invention can better meet the needs of users for the forward collision warning systems and the active collision avoidance system, and can give the driver better choices, thus being more suitable for practical use.

The above description is only an overview of the technical solutions of the present invention. In order to understand the technical means of the present invention more clearly, the present invention can be implemented in accordance with the contents of the specification, and to make the above and other objects, features and advantages of the present invention more obvious, preferred embodiments are listed below and are described in detail as follows in combination with drawings.

## Brief Description of the Drawings

Fig. 1 is a schematic flow diagram of one embodiment of a forward collision avoidance method of a vehicle in the present invention.

Fig. 2 is a schematic diagram of determining a second collision avoidance distance provided by one embodiment of the forward collision avoidance method of the vehicle in the present invention.

Fig. 3A is a schematic diagram of a collision avoidance distance of a collision avoidance method in which only braking collision avoidance is adopted.

Fig. 3B is a schematic diagram of reducing the collision avoidance distance by comprehensively considering braking collision avoidance and steering collision avoidance in one embodiment of the forward collision avoidance method of the vehicle in the present invention.

Fig. 3C is a schematic diagram of increasing the collision avoidance distance by comprehensively considering braking collision avoidance and steering collision avoidance in one embodiment of the forward collision avoidance method of the vehicle in the present invention.

Fig. 4 is a table of critical speeds provided by one embodiment of the forward collision avoidance method of the vehicle in the present invention.

Fig. 5 is a structural schematic diagram of one example of a forward collision avoidance system of a vehicle.

## Detailed Description of the Embodiments

In order to further illustrate the technical means and effects adopted by the present invention to achieve the intended purpose of the present invention, a forward collision avoidance method and system, and the specific embodiments, methods, structures, features and effects thereof proposed according to the present invention are described in detail below in combination with the drawings and preferred embodiments.

The forward collision avoidance method and system proposed in the embodiments of the present invention can be applied to various types of vehicles, such as carts, rail vehicles, ships, aircrafts or the like; and the power supply manner can be pure electric, hybrid, fuel cell, or fuel and the like . The embodiments listed below are examples of land vehicles based on the design of the present invention.

Collision avoidance conditions for warning and active collision avoidance conditions in the embodiments of the present invention can be either distance-based collision avoidance conditions or time-based collision avoidance conditions. In fact, the time-based and distance-based collision avoidance conditions can be converted into each other by a time-distance formula, and in the actual operation, the time is often converted on the condition of distance. The embodiments listed below are based on the design of the present invention and are embodiments of distance-based collision avoidance conditions.

In order to describe the embodiments of the present invention more clearly, the driving direction of the vehicle can be defined as a longitudinal direction, and the direction that is at the same horizontal plane as the driving direction of the vehicle and is perpendicular to the driving direction of the vehicle can be defined as a lateral direction.

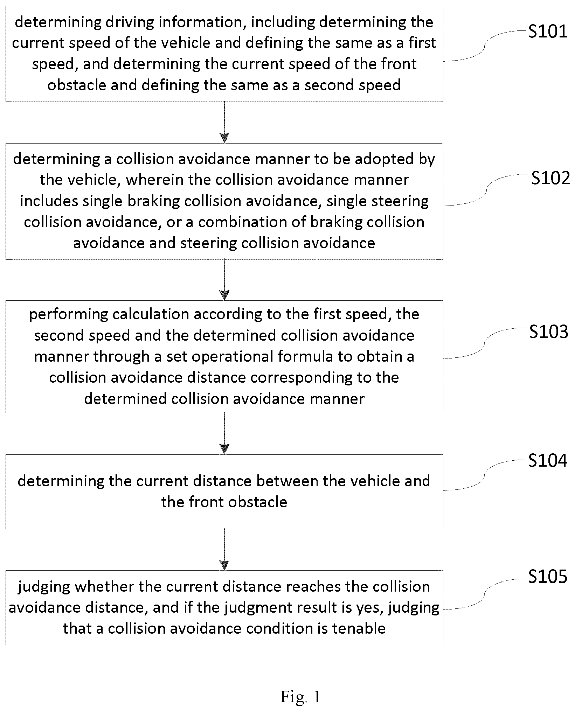

Please refer to Fig. 1, a forward collision avoidance method of a vehicle according to a preferred embodiment of the present invention is shown. It should be understood that, the applicable premise of the collision avoidance method is that the speed of the vehicle is greater than the speed of a front obstacle, so that there is a risk of collision. The collision avoidance method mainly includes the following steps S101 to step S105:

Step S101: determining the current speed of the vehicle and defining the same as a first speed, and determining the current speed of the front obstacle and defining the same as a second speed;

step S102: determining a collision avoidance manner to be adopted by the vehicle, wherein the collision avoidance manner includes single braking collision avoidance, single steering collision avoidance, or a combination of braking collision avoidance and steering collision avoidance;

step S103: performing calculation according to the first speed, the second speed and the determined collision avoidance manner through a set operational formula to obtain a collision avoidance distance corresponding to the determined collision avoidance manner;

step S104: determining the current distance between the vehicle and the front obstacle; and

step S105: judging whether the current distance reaches the collision avoidance distance, and if the judgment result is yes, judging that a collision avoidance condition is tenable.

The above steps are respectively stated and described in detail below.

1. Step S101: determining driving information, including determining the current speed.

The current speed includes the current speed of the vehicle that is defined as the first speed, the current speed of the front obstacle that is defined as the second speed, and the current relative speed between the vehicle and the front obstacle. In fact, considering the relationship among the above three speeds, only two of the three speeds need to be determined. For example, only the first speed and the second speed can be determined, and the relative speed can be obtained by calculating the difference between the second speed and the first speed.

The manner of determining the driving information is not limited, for example, when the vehicle is a car, the driving information can be determined by reading the data of a CAN (Controller Area Network, controller area network ) bus, an LIN (Local Interconnect Network, local interconnect network) bus or a FlexRay bus.

In one embodiment, the driving information further includes acceleration information of the front obstacle, such as the current relative acceleration or the current longitudinal acceleration of the front obstacle, and the acceleration information can be obtained directly from a sensor and can also be obtained by performing differential on or differentiating the determined current relative speed.

In one embodiment, the driving information further includes the width of the front obstacle, the width of the front obstacle can be obtained by the sensor, but in general, the value of the width of the front obstacle can also be preset.

In one embodiment, the driving information further includes historical collision avoidance manners adopted by the driver in past collision avoidance behaviors and speeds corresponding to the past collision avoidance behaviors.

2. Step S102: determining the collision avoidance manner to be adopted by the vehicle. Considering that during collision avoidance, it is possible to adopt both braking measures and steering measures to avoid collision, the collision avoidance manner to be adopted by the vehicle includes single braking collision avoidance, single steering collision avoidance, or a combination of braking collision avoidance and steering collision avoidance.

The collision avoidance manner of the vehicle can be determined in many ways:

A choice can be made by the artificial selection of the driver, for example, the driver inputs the choice of the collision avoidance manner through a button, a screen interface, human-computer interaction and other manners;

different set speeds/relative speed intervals can also be stored in advance, each of the set speeds/relative speed intervals corresponds to a collision avoidance manner, the set speed/relative speed interval into which the current speed/relative speed falls is judged to obtain the collision avoidance manner corresponding to the current speed/relative speed; and the specific current speed/relative speed and the corresponding collision avoidance manner are not limited, for example, steering can be selected for high speeds and braking is selected for low speeds, or steering can also be selected for high relative speeds, and braking is selected for low relative speeds;

or, the past collision avoidance behavior data of the driver can be obtained, including the adopted historical collision avoidance manners, and the speeds of the vehicle corresponding to the past collision avoidance behaviors, which can be personal data of the driver or statistical data of multiple drivers, a variety of specific obtaining manners can be adopted, for example, the past collision avoidance behavior data can be obtained from a local memory and can also be collected in the cloud in advance, and then are obtained from the cloud; the historical collision avoidance manner of the driver at the same speed as the first speed is obtained among the past collision avoidance behaviors, an estimated collision avoidance manner to be adopted by the driver at the first speed is estimated according to the obtained historical collision avoidance manner, for example, the estimated collision avoidance manner is estimated as the collision avoidance manner with the largest proportion or the largest adoption times among the historical collision avoidance manners adopted by the driver among the data corresponding to the current speed/relative speed; and the estimated collision avoidance manner is determined as the collision avoidance manner of the vehicle; and

multiple judgment manners can also be used at the same time, for example, according to the emergency of collision avoidance, the driver makes a choice at first, but when the urgency of collision avoidance reaches a level at which collision avoidance measures must be taken, the vehicle actively chooses to adopt which collision avoidance manner.

In one embodiment, the collision avoidance method further includes a step of storing a critical speed, wherein the critical speed is the speed of the vehicle or the relative speed between the vehicle and the front obstacle, when the collision avoidance distance of the single braking collision avoidance is equal to the collision avoidance distance of the single steering collision avoidance; and the step S102 further includes: obtaining the critical speed, and performing judgment: if the determined current relative speed is less than the critical speed, determining the collision avoidance manner to be adopted by the vehicle as the braking collision avoidance, and if the determined current relative speed is greater than or equal to the critical speed, determining the collision avoidance manner to be adopted by the vehicle as the steering collision avoidance. It should be noted that, in fact, a collision avoidance manner combining the braking collision avoidance with the steering collision avoidance is adopted in the present embodiment.

3. Step S103, performing calculation according to the first speed, the second speed and the determined collision avoidance manner through the set operational formula to obtain the collision avoidance distance corresponding to the determined collision avoidance manner.

Each of the three collision avoidance manners, that is, single braking collision avoidance, single steering collision avoidance and the combination of single braking collision avoidance and single steering collision avoidance, has its own collision avoidance logic and collision avoidance distance calculation method. The three collision avoidance manners are explained separately below.

(1) The collision avoidance manner is single braking collision avoidance.

The collision avoidance logic is that, when the distance between the vehicle and the obstacle reaches a first collision avoidance distance $d_1$, a warning is triggered to remind the driver to brake or actively control the vehicle to brake. Therefore, the collision avoidance distance of the single braking collision avoidance can be determined as a value not less than the first collision avoidance distance $d_1$. Optionally, the collision avoidance distance is determined to not only ensure the success of the braking collision avoidance, but also consider the comfort of the driver during the braking collision avoidance.

The first collision avoidance distance $d_1$ can be calculated in various ways, and specific examples are as follows.

A first embodiment of determining the collision avoidance distance:

The first collision avoidance distance $d_1$ is determined as the sum of an estimated relative displacement within a reaction time of the driver and the estimated relative displacement of the vehicle during braking, and the specific calculation formula of the first collision avoidance distance $d_1$ is:

$$d_1 = |\frac{v_{rel}^2}{2a_{x,sv}}| + |T_d * v_{rel}|,$$

wherein, $| \cdot |$ represents an absolute value sign, and $v_{rel}$ represents the relative speed between the vehicle and the front obstacle, and since the relative speed is often obtained by subtracting the speed of the vehicle from the speed of the obstacle, the relative speed is generally a negative value; $T_d$ represents the time necessary for the driver to make response after warning (during active collision avoidance of the vehicle, $T_d$ is taken as 0 second), $T_d$ may take different values at different traffic states, and $T_d$ can be taken as 1.2 seconds in general; and $a_{x,sv}$ represents a preset braking longitudinal reduction of the vehicle and is a negative value.

It should be noted that, according to different traffic states and different collision avoidance purposes, $a_{x,sv}$ can have different preset values. For example, when a comfortable collision avoidance condition is determined, $a_{x,sv}$ can be preset as a maximum longitudinal deceleration for comfortable braking, and in general, the maximum longitudinal deceleration for comfortable braking can be taken as $0.4g$; and when a safe collision avoidance condition is determined, $a_{x,sv}$ can be preset as a braking ultimate longitudinal deceleration of the vehicle.

A second embodiment of determining the collision avoidance distance:

when the first collision avoidance distance $d_1$ is calculated, the current relative acceleration or the current longitudinal acceleration of the front obstacle is also reckoned in. It should be noted that, the current relative acceleration and the current longitudinal acceleration of the front obstacle can be converted into each other by the relationship between the two and the preset braking longitudinal deceleration of the vehicle. The specific calculation formula of the first collision avoidance distance $d_1$ is a first calculation formula:

$$d_1 = -\frac{(v_{rel}+a_{rel}T_d)^2}{2a_{x,sv}} - T_d v_{rel} - \frac{1}{2}a_{rel}T_d^2,$$

wherein, $v_{rel}$ represents the current relative speed, $a_{rel}$ represents the current relative acceleration, $a_{x,sv}$ represents the preset braking longitudinal deceleration of the vehicle, and $T_d$ represents the reaction time of the driver. It should be noted that, according to different traffic states and different collision avoidance purposes, $a_{x,sv}$ can have different preset values. It should also be noted that, the relative acceleration $a_{rel}$ can be obtained directly from the sensor and can also be obtained by performing differential on or differentiating the current relative speed $v_{rel}$.

The three negative signs in the first calculation formula are adopted due to the consideration of the directions and the positive and negative properties of the speed and the acceleration. Specifically, if the forward direction of the vehicle is defined as a positive direction, since the current relative speed $v_{rel}$ is generally obtained by subtracting the speed of the vehicle from the speed of the front obstacle, while the situation that requires collision avoidance is necessarily that the speed of the vehicle is higher than the speed of the front obstacle, therefore the current relative speed $v_{rel}$ should be a negative value. In addition, the preset braking longitudinal deceleration $a_{x,sv}$ of the vehicle and the current relative acceleration $a_{rel}$ are also contrary to the driving direction during the collision avoidance process, and thus should be negative values. Therefore, in order to ensure that the obtained collision avoidance distance is a positive number, these three negative signs are added.

It should be noted that, the above calculation formula for calculating $d_1$ is an example corresponding to collision warning, and when applied to the example of active collision avoidance of the vehicle, $T_d$ only needs to be taken as 0 second, and at this time, the specific calculation formula of the first collision avoidance distance $d_1$ is a fifth calculation formula:

$$d_1 = -\frac{v_{rel}^2}{2a_{x,sv}},$$

and the negative sign in the calculation formula is adopted due to the consideration of the directions and the positive and negative properties of the speed and the acceleration.

A third embodiment of determining the collision avoidance distance:

when the first collision avoidance distance $d_1$ is calculated, the working condition whether the front obstacle is in a decelerating state and stops before the vehicle is also considered.

Taking the situation in which the driver performs collision avoidance warning as an example, when the front obstacle is not in the preset working condition, and when the collision avoidance distance is calculated, an estimated distance change between the vehicle and the front obstacle is reckoned in the reaction time of the driver; and the preset working condition is that the front obstacle is in a decelerating state and stops before the vehicle, and the front obstacle is not in the preset working condition includes: the front obstacle is in a state in which the speed does not change (a stationary state or a constant speed state), or the front obstacle is an accelerating state, or the front obstacle is in the decelerating state and stops after the vehicle. The specific algorithm can be:

judging whether a first relational expression $T_d - \frac{v_{sv}}{a_{x,sv}} < \frac{-v_{pov}}{a_{x,pov}}$ is tenable, wherein the first relational expression corresponds to the situation in which the front obstacle is not in the preset working condition, the two negative signs in the relational expression are adopted due to the consideration of the directions and the positive and negative properties of the speed and the acceleration, and in fact, the first relational expression is used for judging whether the estimated stop time of the vehicle adopting the braking collision avoidance plus the reaction time of the driver is less than the estimated stop time of the front obstacle; and

if the first relational expression is tenable, then adopting the forgoing first calculation formula:

$$d_1 = -\left(\frac{(v_{rel}+a_{rel}T_d)^2}{2a_{x,sv}} + T_d v_{rel} + \frac{1}{2}a_{rel}T_d^2\right),$$

to calculate the first collision avoidance distance $d_1$. Wherein, $v_{rel}$ represents the current relative speed, $a_{rel}$ represents the current relative acceleration, $a_{x,sv}$ represents the preset braking longitudinal deceleration of the vehicle, and $T_d$ represents the reaction time of the driver. According to different traffic states and different collision avoidance purposes, $a_{x,sv}$ can have different preset values. It should be noted that, the negative sign in the first calculation formula is adopted due to the consideration of the directions and the positive and negative properties of the speed and the acceleration.

In the preset working condition in which the front obstacle is in the decelerating state and stops before the vehicle, when the collision avoidance distance is calculated, an estimated displacement of the front obstacle, obtained from the current speed of the front obstacle and the current deceleration (or acceleration) of the front obstacle, are reckoned in. Specifically, the estimated displacement of the vehicle can be calculated according to the current speed of the vehicle and a set braking deceleration of the vehicle, the estimated displacement of the front obstacle is calculated according to the current speed of the obstacle and the current acceleration of the obstacle, and then the difference of the two estimated displacements is calculated to obtain the first collision avoidance distance. The specific algorithm can be:

judging whether a second relational expression $T_d - \frac{v_{sv}}{a_{x,sv}} \geq \frac{-v_{pov}}{a_{x,pov}}$ is tenable, wherein the second relational expression corresponds to the situation in which the front obstacle is in the decelerating state and stops before the vehicle, the two negative signs in the relational expression are adopted due to the consideration of the directions and the positive and negative properties of the speed and the acceleration, and in fact, the second relational expression is used for judging whether the estimated stop time of the vehicle adopting the braking collision avoidance plus the reaction time of the driver is greater than or equal to the estimated stop time of the front obstacle; and if the second relational expression is tenable, then adopting a second calculation formula:

$$d_1 = -\left(\frac{v_{sv}^2}{2a_{x,sv}} - \frac{v_{pov}^2}{2a_{x,pov}}\right) - T_d v_{rel},$$

to calculate the first collision avoidance distance $d_1$. Wherein, $v_{sv}$ represents the speed of the vehicle, $a_{x,sv}$ represents the preset braking longitudinal deceleration of the vehicle, $v_{pov}$ represents the speed of the front obstacle, $a_{x,pov}$ represents the longitudinal acceleration of the front obstacle, $T_d$ represents the reaction time of the driver, and $v_{rel}$ represents the current relative speed. According to different traffic states and different collision avoidance purposes, $a_{x,sv}$ can have different preset values. It should be noted that, the two negative signs in the second calculation formula are adopted due to the consideration of the directions and the positive and negative properties of the speed and the acceleration.

Therefore, in principle, the calculation formula of the first collision avoidance distance $d_1$ in the present embodiment can be summarized as:

$$d_1 = \begin{cases} -\left(\frac{(v_{rel}+a_{rel}T_d)^2}{2a_{x,sv}} + T_d v_{rel} + \frac{1}{2}a_{rel}T_d^2\right), & T_d - \frac{v_{sv}}{a_{x,sv}} < \frac{-v_{pov}}{a_{x,pov}} \\ \frac{-v_{sv}^2}{2a_{x,sv}} + \frac{v_{pov}^2}{2a_{x,pov}} - T_d v_{rel}, & T_d - \frac{v_{sv}}{a_{x,sv}} \geq \frac{-v_{pov}}{a_{x,pov}} \end{cases}.$$

In addition, it should be noted that the above-mentioned relative acceleration $a_{rel}$ and the longitudinal acceleration $a_{x,pov}$ of the front obstacle can be directly obtained from the sensor, and can also be obtained by performing differential on or differentiating the corresponding speed, and the two can be obtained from each other according to the relationship between the two and the preset braking longitudinal deceleration $a_{x,sv}$ of the vehicle.

(2) The collision avoidance manner is single steering collision avoidance.

By default, after the warning is issued based on the collision avoidance condition, the driver controls the vehicle to take steering measures, or a driving controller of the vehicle controls the vehicle to take steering measures according to the collision avoidance condition. In order to ensure collision avoidance success, the vehicle needs to be staggered from the front obstacle after steering. In order to successfully avoid collision, it is necessary to reserve an enough time for the driver or the vehicle, so that the vehicle can be successfully staggered from the front obstacle after steering. In the case that the warning is issued and the driver operates the vehicle to steer, a sufficient reaction time also needs to be reserved for the driver to complete a steering action. When the distance between the two reaches or is less than a second collision avoidance distance $d_2$, an alarm is triggered to remind the driver to steer or perform active steering. Therefore, the collision avoidance distance of the single steering collision avoidance can be determined as a value not less than the second collision avoidance distance $d_2$. Optionally, the collision avoidance distance is determined to not only ensure the success of the steering collision avoidance, but also consider the comfort of the driver during the steering collision avoidance.

The second collision avoidance distance $d_2$ can be calculated in various ways, and specific examples are as follows.

A fourth embodiment of determining the collision avoidance distance: The second collision avoidance distance $d_2$ is determined as the sum of the estimated relative displacement within the reaction time of the driver and the estimated relative displacement within the time when the vehicle deviates from the front obstacle along the driving direction through the steering action. The specific calculation formula is:

$$d_2 = \left|\sqrt{\frac{2*W}{a_{y,sv}}} v_{rel}\right| + |T_d * v_{rel}|,$$

wherein, $|\cdot|$ represents an absolute value sign, and $v_{rel}$ represents the relative speed between the vehicle and the obstacle, and since the relative speed is often obtained by subtracting the speed of the vehicle from the speed of the obstacle, the relative speed is generally a negative value; $T_d$ represents the time necessary for the driver to make response after warning (during active collision avoidance of the vehicle, $T_d$ is taken as 0 second), $T_d$ may take different values at different traffic states, and $T_d$ can be taken as 1.2 seconds in general; $W$ represents the width of the front obstacle, which can be obtained from the sensor and can also be preset as a fixed value, for example, $W$ can be preset as 2m; and $a_{y,sv}$ represents a present steering lateral acceleration of the vehicle, and $a_{y,sv}$ is a preset value in the process of determining the second collision avoidance distance $d_2$.

It should be noted that, according to different traffic states and different collision avoidance purposes, $a_{y,sv}$ can have different preset values. For example, when the comfortable collision avoidance condition is determined, $a_{y,sv}$ can be preset as a maximum lateral acceleration for comfortable braking, and in general, the maximum lateral deceleration for comfortable braking can be taken as 0.3g; and when the safe collision avoidance condition is determined, $a_{y,sv}$ can be preset as a steering ultimate lateral acceleration of the vehicle.

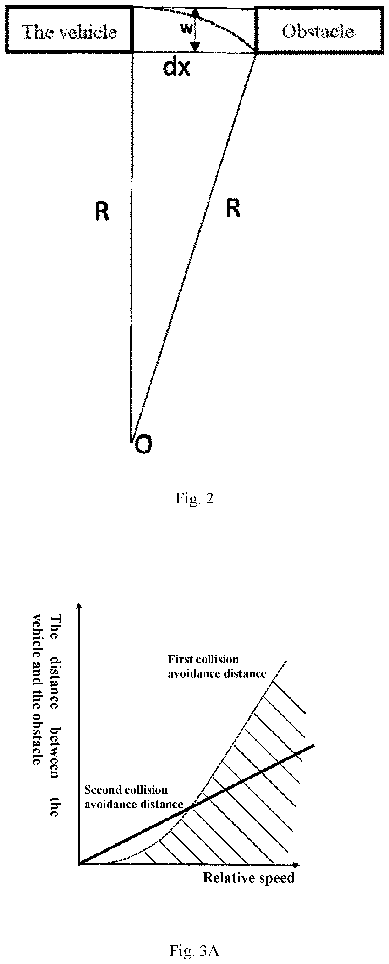

Please refer to Fig. 2, the principle of determining the second collision avoidance distance $d_2$ in the present embodiment is:

known from the Pythagorean theorem $(R - W)^2 + dx^2 = R^2$, wherein, $R$ represents the steering radius of the vehicle, and $dx$ represents the longitudinal displacement of the vehicle during the steering collision avoidance; therefore

$$dx = \sqrt{R^2 - (R - W)^2} = \sqrt{2RW - W^2}\text{ ; and}$$

the formula is substituted into a motion equation $R = \dfrac{v_{rel}^2}{a_{y,max}}$ , wherein, $a_{y,max}$ represents the maximum steering lateral acceleration of the vehicle, and the obtained last point to steer (LPTS, Last point to steer) is:

$$dx_{steer\ min} = \sqrt{2\frac{v_{rel}^2}{a_{y,max}} * W - W^2} \approx \sqrt{\frac{2*W}{a_{y,max}}}\, v_{rel},$$

and the second collision avoidance distance $d_2$ should not be less than the longitudinal displacement $dx$.

A fifth embodiment of determining the collision avoidance distance:

when the second collision avoidance distance $d_2$ is calculated, the estimated displacement of the front obstacle within the time when the vehicle deviates from the front obstacle along the driving direction through the steering action can be reckoned in. The specific calculation formula is:

$$d_2 = -(\sqrt{\frac{2*W}{a_{y,sv}}}\, v_{sv} - \sqrt{\frac{2*W}{a_{y,sv}}} * \frac{v_{sv}}{v_{rel}} * v_{pov} + T_d * v_{rel}),$$

wherein, $v_{sv}$ represents the speed of the vehicle; $v_{pov}$ represents the speed of the obstacle; $v_{rel}$ represents the relative speed between the vehicle and the obstacle, and since the relative speed is often obtained by subtracting the speed of the vehicle from the speed of the obstacle, the relative speed is generally a negative value; $T_d$ represents the time necessary for the driver to make response after warning (during active collision avoidance of the vehicle, $T_d$ is taken as 0 second), $T_d$ may take different values at different traffic states, and $T_d$ can be taken as 1.2 seconds in general; $W$ represents the width of the front obstacle, which can be obtained from the sensor and can also be preset as a fixed value, for example, $W$ can be preset as 2m; and $a_{y,sv}$ represents the steering lateral acceleration of the vehicle, and $a_{y,sv}$ is a preset value in the process of determining the second collision avoidance distance $d_2$. It should be noted that, according to different traffic states and different collision avoidance purposes, $a_{y,sv}$ can have different present values.

The negative signs at the outside of the brackets in the above formula are adopted due to the consideration of the directions and the positive and negative properties of the speed and the acceleration.

It should be noted that, the above calculation formula for calculating $d_2$ is an example corresponding to the collision warning situation, and when applied to the example of active collision avoidance of the vehicle, $T_d$ only needs to be taken as 0 second, and at this time, the specific calculation formula of the second collision avoidance distance $d_2$ is a sixth calculation formula:

$$d_2 = -(\sqrt{\frac{2*W}{a_{y,sv}}}\, v_{sv} - \sqrt{\frac{2*W}{a_{y,sv}}} * \frac{v_{sv}}{v_{rel}} * v_{pov}),$$

and the negative signs in the sixth calculation formula are adopted due to the consideration of the directions and the positive and negative properties of the speed and the acceleration.

A sixth embodiment of determining the collision avoidance distance:

when the second collision avoidance distance $d_2$ is calculated, the current relative acceleration or the current longitudinal acceleration of the front obstacle is also reckoned in.

At this time, the second collision avoidance distance $d_2$ can be calculated by a third calculation formula:

$$d_2 = -v_{rel}\left(T_d + \sqrt{\frac{2*W}{a_{y,sv}}}\right) - \frac{1}{2} a_{rel}\left(T_d + \sqrt{\frac{2*W}{a_{y,sv}}}\right)^2.$$

wherein, $v_{rel}$ represents the current relative speed, $a_{rel}$ represents the current relative acceleration, $a_{y,sv}$ represents the steering lateral acceleration of the vehicle, $T_d$ represents the reaction time of the driver, and $W$ represents the width of the front obstacle. According to different traffic states and different collision avoidance purposes, $a_{y,sv}$ can have different preset values. It should be noted that, the relative acceleration $a_{rel}$ can be obtained directly from the sensor and can also be obtained by performing differential on or differentiating the current relative speed $v_{rel}$; and $W$ can be obtained from the sensor and can also be preset as a fixed value.

The negative signs at the outside of the brackets in the third calculation formula are adopted due to the consideration of the directions and the positive and negative properties of the speed and the acceleration.

A seventh embodiment of determining the collision avoidance distance:

when the second collision avoidance distance $d_2$ is calculated, the working condition whether the front obstacle is in a decelerating state and stops before the vehicle is also considered.

Taking the situation in which the driver performs collision avoidance warning as an example, when the front obstacle is not in the preset working condition, and when the collision avoidance distance is calculated, an estimated distance change between the vehicle and the front obstacle is reckoned in the reaction time of the driver and within the time when the vehicle deviates from the front obstacle along the driving direction through the steering action; and the preset working condition is that the front obstacle is in a decelerating state and stops before the vehicle, and the front obstacle is not in the preset working condition includes: the front obstacle is in a state in which the speed does not change (a stationary state or a constant speed state), or the front obstacle is an accelerating state, or the front obstacle is in the decelerating state and stops after the vehicle. The specific algorithm can be:

judging whether a third relational expression $T_d + \sqrt{\frac{2*W}{a_{y,sv}}} < \frac{-v_{pov}}{a_{x,pov}}$ is tenable, wherein the third relational expression corresponds to the situation in which the front obstacle is not in the preset working condition, the negative sign in the relational expression is adopted due to the consideration of the directions and the positive and negative properties of the speed and the acceleration, and in fact, the third relational expression is used for judging whether the estimated time of the vehicle adopting the steering collision avoidance to successfully avoid collision plus the reaction time of the driver is less than the estimated stop time of the front obstacle; and

if the third relational expression is tenable, then adopting the forgoing third calculation formula:

$$d_2 = -\left(v_{rel}\left(T_d + \sqrt{\frac{2*W}{a_{y,sv}}}\right) + \frac{1}{2} a_{rel}\left(T_d + \sqrt{\frac{2*W}{a_{y,sv}}}\right)^2\right),$$

to calculate the second collision avoidance distance $d_2$. Wherein, $v_{rel}$ represents the current relative speed, $a_{rel}$ represents the current relative acceleration, $a_{y,sv}$ represents the preset steering lateral acceleration of the vehicle, $T_d$ represents the reaction time of the driver, $W$ represents the width of the front obstacle, $v_{pov}$ represents the speed of the front obstacle, and $a_{x,pov}$ represents the longitudinal acceleration of the front obstacle. According to different traffic states and different collision avoidance purposes, $a_{y,sv}$ can have different preset values. It should be noted that, the negative sign at the outside of the brackets in the third calculation formula is adopted due to the consideration of the directions and the positive and negative properties of the speed and the acceleration.

In the preset working condition in which the front obstacle is in the decelerating state and stops before the vehicle, when the collision avoidance distance is calculated, an estimated displacement of the front obstacle, obtained from the current speed of the front obstacle and the current deceleration (or acceleration) of the front obstacle, are reckoned in. Specifically, the estimated longitudinal displacement of the vehicle can be calculated according to the current speed of the vehicle and a set steering deceleration of the vehicle, the estimated longitudinal displacement of the front obstacle is calculated according to the current speed of the obstacle and the current acceleration of the obstacle, and then the difference of the two estimated displacements is calculated to obtain the second collision avoidance distance. The specific algorithm can be:

judging whether a fourth relational expression $T_d + \sqrt{\frac{2*W}{a_{y,sv}}} \geq \frac{-v_{pov}}{a_{x,pov}}$ is tenable, wherein the fourth relational expression corresponds to the situation in which the front obstacle is in the decelerating state and stops before the vehicle, the negative sign in the relational expression is adopted due to the consideration of the directions and the positive and negative properties of the speed and the acceleration, and in fact, the fourth relational expression is used for judging whether the estimated time of the vehicle adopting the steering collision avoidance to successfully avoid collision plus the reaction time of the driver is greater than or equal to the estimated stop time of the front obstacle; and

if the fourth relational expression is tenable, then adopting a fourth calculation formula:

$$d_2 = v_{sv}\left(T_d + \sqrt{\frac{2*W}{a_{y,sv}}}\right) + \frac{v_{pov}^2}{2a_{x,pov}},$$

to calculate the second collision avoidance distance $d_2$. Wherein, $a_{y,sv}$ represents the preset steering acceleration of the vehicle, $T_d$ represents the reaction time of the driver, W represents the width of the front obstacle, $v_{sv}$ represents the speed of the vehicle, $v_{pov}$ represents the speed of the front obstacle, and $a_{x,pov}$ represents the longitudinal acceleration of the front obstacle (since the front obstacle is in the decelerating state, $a_{x,pov}$ is a negative value). According to different traffic states and different collision avoidance purposes, $a_{y,sv}$ can have different preset values.

Therefore, in principle, the calculation formula of the second collision avoidance distance $d_2$ in the present embodiment can be summarized as:

$$d_2 = \begin{cases} -\left(v_{rel}\left(T_d + \sqrt{\frac{2*W}{a_{y,sv}}}\right) + \frac{1}{2}a_{rel}\left(T_d + \sqrt{\frac{2*W}{a_{y,sv}}}\right)^2\right), & T_d + \sqrt{\frac{2*W}{a_{y,sv}}} < \frac{-v_{pov}}{a_{x,pov}} \\ v_{sv}\left(T_d + \sqrt{\frac{2*W}{a_{y,sv}}}\right) + \frac{v_{pov}^2}{2a_{x,pov}}, & T_d + \sqrt{\frac{2*W}{a_{y,sv}}} \geq \frac{-v_{pov}}{a_{x,pov}} \end{cases}.$$

In addition, it should be noted that the relative acceleration $a_{rel}$ and the longitudinal acceleration $a_{x,pov}$ of the front obstacle can be directly obtained from the sensor, and can also be obtained by performing differential on or differentiating the corresponding speed, and the two can be obtained from each other according to the relationship between the two and the preset braking longitudinal deceleration $a_{x,sv}$ of the vehicle; and W can be obtained from the sensor and can also be preset as a fixed value.

(3) The collision avoidance manner is the combination of braking collision avoidance and steering collision avoidance.

It should be noted that, the "collision avoidance manner is the combination of braking collision avoidance and steering collision avoidance" in the present embodiment can have two understandings. The first understanding is that the collision avoidance manner is determined as the combination of braking collision avoidance and steering collision avoidance, that is, it is defaulted that the driver or the vehicle will adopt both braking and steering manners during collision avoidance. The second understanding is that the collision avoidance manner is not specified, that is, the collision avoidance manner is not clearly defined, and at this time, the collision avoidance manner can be determined according to the collision avoidance distances corresponding to the two collision avoidance manners and the current driving parameters.

The collision avoidance distance of the combination of braking collision avoidance and steering collision avoidance is determined as a value not less than a third collision avoidance distance $d_3$, when the distance between the vehicle and the front obstacle reaches or is less than the collision avoidance distance of the combination of braking collision avoidance and steering collision avoidance, an alarm is triggered to remind the driver to avoid collision or perform active collision avoidance. According to different collision avoidance purposes or according to different traffic situations, multiple strategies can be adopted to determine the third collision avoidance distance $d_3$.

Specifically, in one example, in order to reduce redundant warning and redundant active collision avoidance, the third collision avoidance distance $d_3$ can be determined as the smaller one of the first collision avoidance distance $d_1$ obtained by only considering the single braking collision avoidance and the second collision avoidance distance $d_2$ obtained by only considering the single steering collision avoidance, and the collision avoidance manner integrating braking and steering can be determined as the collision avoidance manner manner corresponding to the smaller one of the first collision avoidance distance $d_1$ and the second collision avoidance distance $d_2$. Generally, the collision avoidance distance can be determined by this manner in any situation. In addition, it should be noted that, in the embodiment of using the method to perform collision avoidance warning, if the warning signal does not distinguish the collision avoidance manner, only the collision avoidance distance can be determined without further determining the collision avoidance manner herein.

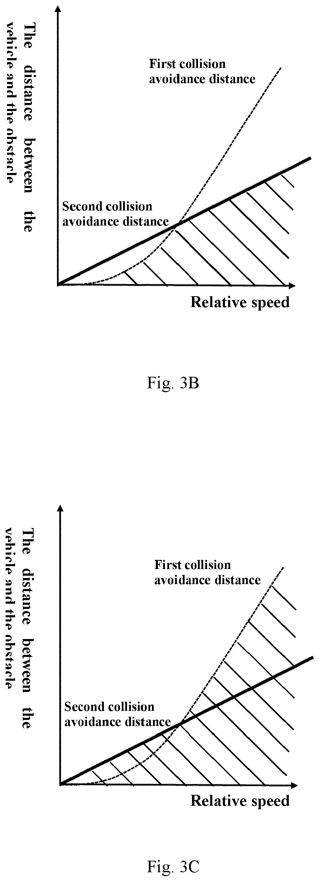

Fig. 3A and Fig. 3B schematically show function images of the first collision avoidance distance and the second collision avoidance distance, wherein an imaginary line of a parabolic type represents the first collision avoidance distance corresponding to the single braking collision avoidance, a linear full line represents the second collision avoidance distance corresponding to the single steering collision avoidance, a shaded portion of Fig. 3A represents the distance between the vehicle and the obstacle that makes the collision avoidance condition tenable, when only the single braking collision avoidance situation is considered, and the shaded portion of Fig. 3B represents the distance that makes the collision avoidance condition tenable, when the collision avoidance distance $d_3$ is taken as the smaller one of the first collision avoidance distance $d_1$ and the second collision avoidance distance $d_2$. By comparing the areas of the shaded portions in Fig. 3A and Fig. 3B, it can be known that the method of determining the third collision avoidance distance $d_3$ in this example can be used for effectively reducing the distance between the vehicle and the obstacle that makes the collision avoidance condition tenable, in this way, by reasonably improving the collision avoidance conditions, redundant warning/redundant active collision avoidance is effectively reduced, and the interference to the driver by frequent warning/frequent active frequent collision avoidance is reduced.

In another example, in order to improve the driving safety of the vehicle, the third collision avoidance distance $d_3$ can be determined as the greater one of the first collision avoidance distance $d_1$ and the second collision avoidance distance $d_2$, and the collision avoidance manner integrating braking and steering is determined as the collision avoidance manner corresponding to the greater one of the first collision avoidance distance $d_1$ and the second collision avoidance distance $d_2$. For example, this manner can be used, when the current speed of the vehicle is higher (the relative speed between the vehicle and the obstacle is not necessarily large), or when the vehicle is traveling on an expressway.

Similar to Fig. 3A, Fig. 3C also schematically shows the function images of the first collision avoidance distance and the second collision avoidance distance, and the shaded portion of Fig. 3C represents the distance that makes the collision avoidance condition tenable, when the collision avoidance distance $d_3$ is taken as the greater one of the first collision avoidance distance $d_1$ and the second collision avoidance distance $d_2$. By comparing the areas of the shaded portions in Fig. 3A and Fig. 3C, it can be known that the method of determining the third collision avoidance distance $d_3$ in this example can effectively increase the collision avoidance distance between the vehicle and the obstacle that makes the collision avoidance condition tenable, in this way, by reasonably reducing the collision avoidance conditions, the effect of improving the driving safety is achieved.

According to the invention, a set speed is preset, when the current speed of the vehicle is less than or equal to the set speed, the third collision avoidance distance $d_3$ is determined as the smaller one of the first collision avoidance distance $d_1$ and second avoidance distance $d_2$ to achieve the effect of reducing redundant collision avoidance; and when the current speed of the vehicle is greater than the set speed, the third collision avoidance distance $d_3$ is determined as the greater one of the first collision avoidance distance $d_1$ and second avoidance distance $d_2$ to achieve the effect of improving the driving safety of the vehicle in high-risk situations.

It should be noted that, the set speed can be preset in various ways. For example, the set speed can be set to be equal to or exceed an ultimate speed of the vehicle, in this way, the condition, that is, the current speed of the vehicle is less than or equal to the set speed, is always tenable; and as another example, the set speed can be set as a higher speed, for example, when the vehicle is a car, the set speed can be set as the minimum ultimate speed of the expressway or a high-speed lane.

In one embodiment, the speed of the vehicle or the relative speed between the vehicle and the obstacle are pre-stored, when the first collision avoidance distance $d_1$ and the second collision avoidance distance $d_2$ are equal, and the speed can be named as the critical speed $v_{cutoffpoint}$.

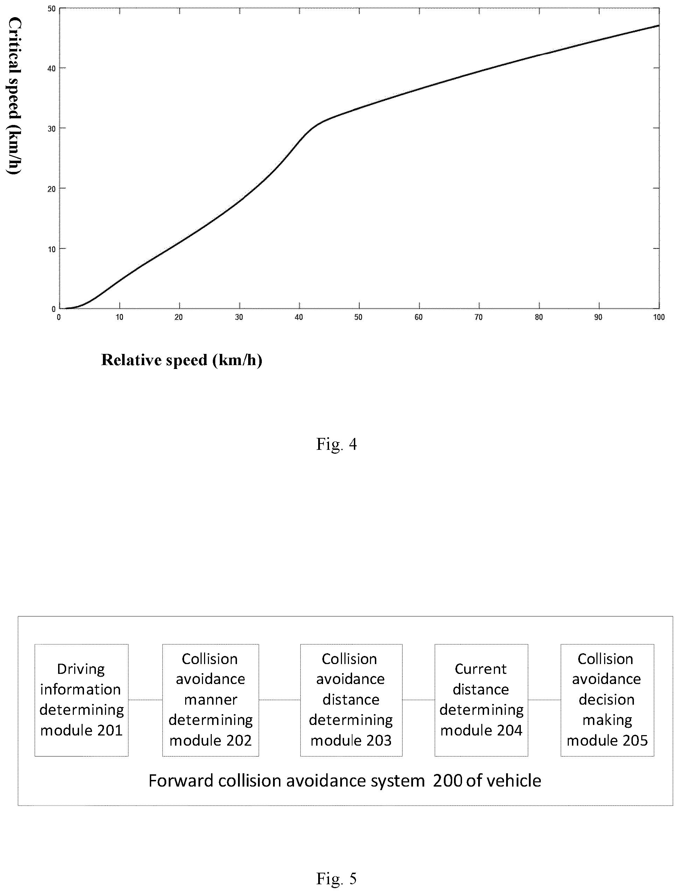

Fig. 4 schematically shows a function chart of a critical speed $v_{cutoffpoint}$ calculated in advance. In a specific example, the relative speed that makes the calculation formula

$$\frac{v_{rel}^2}{2a_{x,sv}} = \sqrt{\frac{2*W}{a_{y,sv}}}\, v_{sv} - \sqrt{\frac{2*W}{a_{y,sv}}} * \frac{v_{sv}}{v_{rel}} * v_{pov}$$

tenable can be pre-calculated, and the table of the relative speed is pre-stored. Or, in another specific example, the relative speed that makes the calculation formula

$$\frac{(v_{rel}+a_{rel}T_d)^2}{2a_{x,sv}} + T_d v_{rel} + \frac{1}{2} a_{rel} T_d{}^2 = v_{rel}\left(T_d + \sqrt{\frac{2*W}{a_{y,sv}}}\right) + \frac{1}{2} a_{rel}\left(T_d + \sqrt{\frac{2*W}{a_{y,sv}}}\right)^2$$ tenable is pre-calculated to obtain the critical speed $v_{cutoffpoint}$ shown in Fig. 4, and the table of the critical speed $v_{cutoffpoint}$ is pre-stored.

The method of determining the collision avoidance manner and the collision avoidance distance $d_3$ of the vehicle by using the pre-stored critical speed $v_{cutoffpoint}$ includes: judging whether the current relative speed $v_{rel}$ is less than the pre-stored critical speed $v_{cutoffpoint}$, and if so, determining the collision avoidance manner to be adopted by the vehicle as braking collision avoidance, and determining the third collision avoidance distance $d_3$ as the first collision avoidance distance $d_1$; if the current relative speed $v_{rel}$ is greater than or equal to the pre-stored critical speed $v_{cutoffpoint}$, determining the collision avoidance manner to be adopted by the vehicle as steering collision avoidance, and determining the third collision avoidance distance $d_3$ as the second collision avoidance distance $d_2$.

Therefore, when the collision avoidance manner and the collision avoidance distance $d_3$ of the vehicle are determined, for the determined current relative speed, it is possible to directly query the table in which the critical speed is stored without calculating, and to compare the current relative speed with the critical speed to determine the collision avoidance manner to be adopted by the vehicle, thereby effectively simplifying the process of determining the collision avoidance condition.

Optionally, a variety of collision avoidance distances can also be set.

For example, based on different collision avoidance purposes, a variety of collision avoidance distances can be set, such as a safe collision avoidance distance and a comfortable collision avoidance distance, by presetting a plurality of different braking decelerations of the vehicle, or presetting a plurality of different steering accelerations of the vehicle. In one example, a plurality of collision avoidance distances $d_3$ corresponding to different braking decelerations and different steering accelerations are set. Specifically, a plurality of different braking decelerations $a_{x,sv}$ of the vehicle are preset, such as a longitudinal deceleration for comfortable collision avoidance and a longitudinal deceleration for ultimate collision avoidance, which are substituted into the calculation formula of the first collision avoidance distance $d_1$ to obtain a plurality of collision avoidance distances corresponding to the braking manner; and similarly, a plurality of collision avoidance distances corresponding to the steering mode can be obtained according to a plurality of different preset steering accelerations $a_{y,sv}$ of the vehicle.

As another example, considering that the driving comfort is also related to the speed of the vehicle, a variety of collision avoidance distances corresponding to different speeds can be set, for a preset high-speed situation, after the collision avoidance distance is obtained according to the foregoing embodiment, it can be multiplied by a coefficient greater than 1 to increase the collision avoidance distance at high speed and to improve the driving comfort.

Optionally, multilevel collision avoidance distances can also be set. For example, based on the size relationship between the current distance and the collision avoidance distance, such as a collision avoidance distance when the current distance reaches 110%, a collision avoidance distance when the current distance reaches 90%, the multilevel collision avoidance distances are set to distinguish the urgency of collision avoidance.

By setting multiple and multilevel collision avoidance conditions, the driving safety, the driving comfort and the driving experience can be effectively improved.

4. Step S104: determining the current distance $d$ between the vehicle and the front obstacle.

The manner of determining the current distance $d$ is not limited, for example, when the vehicle is a car, the current distance can be determined by reading the data in a CAN (Controller Area Network, controller area network ) bus, an LIN (Local Interconnect Network, local interconnect network) bus or a FlexRay bus

5. Step S105, judging whether the current distance $d$ reaches the collision avoidance distance determined in the step S103, and if the judgment result is yes, judging that the collision avoidance condition is tenable.

Corresponding to the situation of multiple or multilevel collision avoidance distances in the step S103, the collision avoidance situations can be classified in advance, and it is judged that the collision avoidance condition corresponding to the highest level collision avoidance condition among the satisfied collision avoidance conditions is tenable; and the collision avoidance situations can also be not classified, but whether the current distance reaches at least one of the plurality of collision avoidance distances is judged, and it is judged that the collision avoidance condition corresponding to the largest collision avoidance distance among the plurality of collision avoidance distances reached by the current distance is tenable.

In one embodiment of the collision avoidance method of the present invention, the method further includes: when the collision avoidance condition is tenable, generating and sending a warning signal to the driver to remind the driver to take collision avoidance measures.

In the present embodiment, when the collision avoidance distance is calculated, various calculation formulas for calculating the collision avoidance distance corresponding to the collision avoidance warning in the embodiment of the foregoing step S103 can be used, and the reaction time of the driver should be considered during the calculation.

The warning signal can include one or some of a sound warning signal, a voice warning signal, a graphic warning signal, an indicator light warning signal, and a human-machine interaction (HMI) warning signal.

Corresponding to the above situation of multiple or multilevel collision avoidance distances, multiple or multilevel warning signals can be generated, and different warning signals can be generated according to the urgency of the driving information or the level of the warning signal, for example, the volume of the warning sound is gradually increased according to the urgency, the content of the voice prompt is changed, the flashing frequency of the prompt light is increased, and so on. The warning signal can be different based on the determined collision avoidance manner, for example, specific suggestions for collision avoidance are added to a sound signal and a text signal. When the warning signal is sent to the driver, different types of warning signals, different levels of warning signals, and stop warning can be switched.

In one embodiment of the collision avoidance method of the present invention, the method further includes: when the collision avoidance condition is tenable, generating and issuing a collision avoidance instruction to the vehicle to control the vehicle to adopt collision avoidance measures according to the determined collision avoidance manner, and the collision avoidance instruction can include collision avoidance power parameter information corresponding to the collision avoidance manner.

In the present embodiment, when the collision avoidance distance is calculated, various calculation formulas for calculating the collision avoidance distance corresponding to active collision avoidance in the embodiment of the foregoing step S103 can be used.

When the vehicle is a car, the vehicle adopting collision avoidance measures according to the determined collision avoidance manner can specifically include: the car performs active collision avoidance by controlling a braking actuator and/or a steering actuator according to the information contained in the collision avoidance instruction. Optionally, the active collision avoidance can also include assisting the collision avoidance operation of the driver according to an active collision avoidance instruction, and adjusting the collision avoidance manner and collision avoidance power parameters to smoothly perform collision avoidance; and the assistance of the collision avoidance operation of the driver can also be implemented in a human-computer interaction (HMI) manner.

In addition, in practice, the collision avoidance method of the present invention can perform multiple rounds of collision avoidance, each round of collision avoidance can include performing warning on the driver or performing active collision avoidance by the vehicle according to the steps of any foregoing embodiment of the collision avoidance method of the present invention, in order to adapt to the changes in traffic scenarios and to particularly adapt to the embodiments in which multiple or multilevel collision avoidance distances are set.

Please refer to Fig. 5, a forward collision avoidance system 200 of a vehicle proposed according to an example not covered by the present invention is shown. It should be understood that the premise of starting the collision avoidance system is that the speed of the vehicle is greater than the speed of a front obstacle, so that there is a risk of collision. The collision avoidance system mainly includes a driving information determining module 201, a collision avoidance manner determining module 202, a collision avoidance distance determining module 203, a current distance determining module 204, and a collision avoidance decision making module 205. Moreover, when the present collision avoidance system 200 is used for warning the driver, the present system 200 can further include a warning module; and when the present collision avoidance system 200 is used for performing active collision avoidance of the vehicle, the present system 200 can further include an active collision avoidance module.

The driving information determining module 201 is configured to determine driving information, including determining the current speed.

The current speed includes the current speed of the vehicle that is defined as the first speed, the current speed of the front obstacle that is defined as the second speed, and the current relative speed between the vehicle and the front obstacle. In fact, considering the relationship among the above three speeds, only two of the three speeds need to be determined. For example, only the first speed and the second speed can be determined, and the relative speed can be obtained by calculating the difference between the second speed and the first speed.

The specific device of determining the driving information is not limited, for example, when the vehicle is a car, the driving information determining module 201 can determine the driving information collected by a camera, a millimeter wave radar, a laser radar, a front vehicle radar, an ultrasonic sensor, a magnetoelectric vehicle speed sensor, a photoelectric vehicle speed sensor or Hall vehicle speed sensor or the like by reading the data of a CAN (Controller Area Network, controller area network ) bus, an LIN (Local Interconnect Network, local interconnect network) bus or a FlexRay bus.

In one example, the driving information determining module 201 is further configured to determine acceleration information of the front obstacle, such as the current relative acceleration or the current longitudinal acceleration of the front obstacle, and the acceleration information can be obtained directly from a sensor and can also be obtained by performing differential on or differentiating the determined current relative speed.

In one example, the driving information determining module 201 is further configured to determine the width of the front obstacle, the width of the front obstacle can be obtained by the sensor, but in general, the value of the width of the front obstacle can also be preset.

In one example, the driving information further includes historical collision avoidance manners adopted by the driver in past collision avoidance behaviors and speeds corresponding to the past collision avoidance behaviors.

The collision avoidance manner determining module 202 is configured to determine a collision avoidance manner to be adopted by the vehicle. The collision avoidance manner includes single braking collision avoidance, single steering collision avoidance, or a combination of braking collision avoidance and steering collision avoidance

It should be noted that, the "collision avoidance manner is the combination of braking collision avoidance and steering collision avoidance" in the present embodiment can have two understandings. The first understanding is that the collision avoidance manner is determined as the combination of braking collision avoidance and steering collision avoidance, that is, it is defaulted that the driver or the vehicle will adopt both braking and steering manners during collision avoidance. The second understanding is that the collision avoidance manner is not specified, that is, the collision avoidance manner is not clearly defined, and at this time, the collision avoidance manner can be determined according to the collision avoidance distances corresponding to the two collision avoidance manners and the current driving parameters.

The collision avoidance manner determining module 202 can include one or more sub-modules to determine the collision avoidance manner of the vehicle in the following different manners.

The collision avoidance manner determining module 202 can include one sub-module, configured to make a choice by the artificial selection of the driver, for example, the driver inputs the choice of the collision avoidance manner through a button, a screen interface, human-computer interaction and other manners; and

the collision avoidance manner determining module 202 can also include one sub-module, configured to store different set speeds/relative speed intervals in advance, wherein each of the set speeds/relative speed intervals corresponds to a collision avoidance manner, and judge the set speed/relative speed interval into which the current speed/relative speed falls to obtain the collision avoidance manner corresponding to the current speed/relative speed; and the specific current speed/relative speed and the corresponding collision avoidance manner are not limited, for example, steering can be selected for high speeds and braking is selected for low speeds, or steering can also be selected for high relative speeds, and braking is selected for low relative speeds.

The collision avoidance manner determining module 202 can further include:

a first historical collision avoidance information obtaining sub-module, configured to obtain past collision avoidance behavior data of the driver, including the adopted historical collision avoidance manners, and the speeds of the vehicle corresponding to the past collision avoidance behaviors, which can be personal data of the driver or statistical data of multiple drivers, a variety of specific obtaining manners can be adopted, for example, the past collision avoidance behavior data can be obtained from a local memory and can also be collected in the cloud in advance, and then are obtained from the cloud;

a second historical collision avoidance information obtaining sub-module, configured to obtain the historical collision avoidance manner of the driver at the same speed as the first speed among the past collision avoidance behaviors; a collision avoidance manner estimation sub-module, configured to estimate an estimated collision avoidance manner to be adopted by the driver at the first speed according to the obtained historical collision avoidance manner, for example, the estimated collision avoidance manner is estimated as the collision avoidance manner with the largest proportion or the largest adoption times among the historical collision avoidance manners adopted by the driver among the data corresponding to the current speed/relative speed; and

a first collision avoidance manner determining sub-module, configured to determine the estimated collision avoidance manner as the collision avoidance manner of the vehicle.

The collision avoidance manner determining module 202 can also include one sub-module, configured to use multiple judgment manners at the same time, for example, according to the emergency of collision avoidance, the driver makes a choice at first, but when the urgency of collision avoidance reaches a level at which collision avoidance measures must be taken, the vehicle actively chooses to adopt which collision avoidance manner.

In one example, the forward collision avoidance system 200 of the vehicle further includes a critical speed storage module (not drawn in the figure), configured to store a critical speed, wherein the critical speed is the speed of the vehicle or the relative speed between the vehicle and the front obstacle, when the collision avoidance distance of the single braking collision avoidance is equal to the collision avoidance distance of the single steering collision avoidance. Furthermore, the collision avoidance manner determining module 202 includes a second collision avoidance manner determining sub-module, configured to obtain the critical speed, and perform judgement: if the determined current relative speed is less than the critical speed, determine the collision avoidance manner to be adopted by the vehicle as the braking collision avoidance, and if the determined current relative speed is greater than or equal to the critical speed, determine the collision avoidance manner to be adopted by the vehicle as the steering collision avoidance. It should be noted that, in fact, the collision avoidance manner combining the braking collision avoidance with the steering collision avoidance is adopted in the present embodiment.

The collision avoidance distance determining module 203 is configured to perform calculation according to the first speed, the second speed and the determined collision avoidance manner through a set operational formula to obtain a collision avoidance distance corresponding to the determined collision avoidance manner.

Each of the three collision avoidance manners, that is, single braking collision avoidance, single steering collision avoidance and the combination of single braking collision avoidance and single steering collision avoidance, has its own collision avoidance logic and collision avoidance distance calculation method. Therefore, the collision avoidance distance determining module 203 can include different collision avoidance distance determining sub-modules corresponding to different collision avoidance manners:

(1) a collision avoidance distance determining sub-module corresponding to the single braking collision avoidance.

The sub-module is configured to determine the collision avoidance distance corresponding to the single braking collision avoidance.

Specifically, the collision avoidance distance determining sub-module corresponding to the single braking collision avoidance can be used for implementing the specific steps shown in the first embodiment, the second embodiment or the third embodiment of determining the collision avoidance distance in the step S103 in the foregoing embodiment of the collision avoidance method of the present invention, so as to calculate the first collision avoidance distance $d_1$, and determine the collision avoidance distance of the single braking collision avoidance as a value not less than the first collision avoidance distance $d_1$.

(2) a collision avoidance distance determining sub-module corresponding to the single steering collision avoidance.

The sub-module is configured to determine the collision avoidance distance corresponding to the single steering collision avoidance.

Specifically, the collision avoidance distance determining sub-module corresponding to the single steering collision avoidance can be used for implementing the specific steps shown in the fourth embodiment, the fifth embodiment, the sixth embodiment or the seventh embodiment of determining the collision avoidance distance in the step S103 in the foregoing embodiment of the collision avoidance method of the present invention, so as to calculate the second collision avoidance distance $d_2$, and determine the collision avoidance distance of the single steering collision avoidance as a value not less than the second collision avoidance distance $d_2$.

(3) a collision avoidance distance determining sub-module corresponding to integrated braking and steering.

The sub-module is configured to determine the collision avoidance distance of the integrated braking collision avoidance and steering collision avoidance as a value not less than a third collision avoidance distance $d_3$, and when the distance between the vehicle and the front vehicle reaches or is less than the collision avoidance distance of the integrated braking collision avoidance and steering collision avoidance, trigger an alarm to remind the driver to avoid collision or to perform active collision avoidance. According to different collision avoidance purposes or different traffic situations, the sub-module can be specifically configured to adopt a plurality of different strategies to determine the third collision avoidance distance $d_3$, or the sub-module can include a variety of units, configured to adopt different strategies to determine the collision avoidance distance.

Specifically, in one example, the collision avoidance distance determining sub-module corresponding to integrated braking and steering is specifically configured to determine the third collision avoidance distance $d_3$ as the smaller one of the first collision avoidance distance $d_1$ obtained by only considering the single braking collision avoidance and the second collision avoidance distance $d_2$ obtained by only considering the single steering collision avoidance, in order to achieve the effect of reducing redundant warning and redundant active collision avoidance. Generally, the collision avoidance distance can be determined by this manner in any situation.

In another example, the collision avoidance distance determining sub-module corresponding to integrated braking and steering is specifically configured to determine the third collision avoidance distance $d_3$ as the greater one of the first collision avoidance distance $d_1$ and the second collision avoidance distance $d_2$, in order to improve the driving safety of the vehicle. For example, this manner can be used, when the current speed of the vehicle is higher (the relative speed between the vehicle and the obstacle is not necessarily large), or when the vehicle is traveling on an expressway.

Furthermore, multiple methods of determining the third collision avoidance distance $d_3$ can also be combined. For example, in one example, a set speed can be preset, the collision avoidance distance determining sub-module corresponding to integrated braking and steering is specifically configured to: when the current speed of the vehicle is less than or equal to the set speed, determine the collision avoidance distance $d_3$ of integrated braking and steering as the smaller one of the first collision avoidance distance $d_1$ and second avoidance distance $d_2$ to achieve the effect of reducing redundant collision avoidance; and when the current speed of the vehicle is greater than the set speed, determine the collision avoidance distance $d_3$ of integrated braking and steering as the greater one of the first collision avoidance distance $d_1$ and second avoidance distance $d_2$ to achieve the effect of improving the driving safety of the vehicle in high-risk situations.

It should be noted that, the set speed can be preset in various ways. For example, the set speed can be set to be equal to or exceed an ultimate speed of the vehicle, in this way, the condition, that is, the current speed of the vehicle is less than or equal to the set speed, is always tenable; and as another example, the set speed can be set as a higher speed, for example, when the vehicle is a car, the set speed can be set as the minimum ultimate speed of the expressway or a high-speed lane.

In one example, the forward collision avoidance system 200 of the vehicle further includes a set speed interval storage module, configured to pre-store the speed of the vehicle or the relative speed between the vehicle and the obstacle are pre-stored, when the first collision avoidance distance $d_1$ and the second collision avoidance distance $d_2$ are equal, and the speed can be named as the critical speed $v_{cutoffpoint}$. The set speed interval storage module can be a non-volatile storage media, such as a flash memory.

Fig. 4 schematically shows a function chart of a critical speed $v_{cutoffpoint}$ calculated in advance. In a specific example, the relative speed that makes the calculation formula $\dfrac{v_{rel}^2}{2a_{x,sv}} = \sqrt{\dfrac{2*W}{a_{y,sv}}}\, v_{sv} - \sqrt{\dfrac{2*W}{a_{y,sv}}} * \dfrac{v_{sv}}{v_{rel}} * v_{pov}$ tenable can be pre-calculated, and the table of the relative speed is pre-stored in the set speed interval storage module. Or, in another specific example, the relative speed that makes the calculation formula

$$\dfrac{(v_{rel}+a_{rel}T_d)^2}{2a_{x,sv}} + T_d v_{rel} + \dfrac{1}{2} a_{rel}T_d^2 = v_{rel}\left(T_d + \sqrt{\dfrac{2*W}{a_{y,sv}}}\right) + \dfrac{1}{2} a_{rel}\left(T_d + \sqrt{\dfrac{2*W}{a_{y,sv}}}\right)^2$$ tenable is pre-calculated to obtain the critical speed $v_{cutoffpoint}$ shown in Fig. 4, and the table of the critical speed $v_{cutoffpoint}$ is pre-stored in the set speed interval storage module.

The foregoing collision avoidance manner determining module 202 is specifically configured to judge whether the current relative speed $v_{rel}$ is less than the pre-stored critical speed $v_{cutoffpoint}$, and if so, determine the collision avoidance manner to be adopted by the vehicle as braking collision avoidance; and if the current relative speed $v_{rel}$ is greater than or equal to the pre-stored critical speed $v_{cutoffpoint}$, determine the collision avoidance manner to be adopted by the vehicle as steering collision avoidance. The collision avoidance distance determining module 203 is specifically configured to: when the collision avoidance manner determining module 202 determines the collision avoidance manner to be adopted by the vehicle as the braking collision avoidance, determine the third collision avoidance distance $d_3$ as the first collision avoidance distance $d_1$; and when the collision avoidance manner determining module 202 determines the collision avoidance manner to be adopted by the vehicle as the steering collision avoidance, determine the third collision avoidance distance $d_3$ as the second collision avoidance distance $d_2$.

Therefore, when the collision avoidance manner determining module 202 and the collision avoidance distance determining module 203 determine the collision avoidance manner and the collision avoidance distance $d_3$ of the vehicle, for the determined current relative speed, it is possible to directly query the table in which the critical speed is stored in the set sped interval storage module without calculating, and to compare the current relative speed with the critical speed to determine the collision avoidance manner to be adopted by the vehicle, thereby effectively simplifying the process of determining the collision avoidance condition.

Optionally, the collision avoidance distance determining module 203 is further configured to set a variety of collision avoidance distances.

For example, based on different collision avoidance purposes, a variety of collision avoidance distances can be set, such as a safe collision avoidance distance and a comfortable collision avoidance distance, by presetting a plurality of different braking decelerations of the vehicle, or presetting a plurality of different steering accelerations of the vehicle. In one example, a plurality of collision avoidance distances $d_3$ corresponding to different braking decelerations and different steering accelerations are set. Specifically, the collision avoidance distance determining module 203 is configured to set a plurality of different braking decelerations $a_{x,sv}$ of the vehicle, such as a longitudinal deceleration for comfortable collision avoidance and a longitudinal deceleration for limit collision avoidance, and substitute the braking decelerations into the calculation formula of the first collision avoidance distance $d_1$ to obtain a plurality of collision avoidance distances corresponding to the braking manner; and similarly, the collision avoidance distance determining module 203 is configured to obtain a plurality of collision avoidance distances corresponding to the steering mode according to a plurality of present different preset steering accelerations $a_{y,sv}$ of the vehicle.

As another example, considering that the driving comfort is also related to the speed of the vehicle, the collision avoidance distance determining module 203 can be configured to set a variety of collision avoidance distances corresponding to different speeds, for a preset high-speed situation, after the collision avoidance distance is obtained according to the foregoing embodiment, it can be multiplied by a coefficient greater than 1 to increase the collision avoidance distance at high speed and to improve the driving comfort.

Optionally, multilevel collision avoidance distances can also be set. For example, the collision avoidance distance determining module 203 can be further configured to, based on the size relationship between the current distance and the collision avoidance distance, such as a collision avoidance distance when the current distance reaches 110%, a collision avoidance distance when the current distance reaches 90%, set the multilevel collision avoidance distances to distinguish the urgency of collision avoidance.

By setting multiple and multilevel collision avoidance conditions, the driving safety, the driving comfort and the driving experience can be effectively improved.

The current distance determining module 204 is configured to determine the current distance d between the vehicle and the front obstacle.

The manner of determining the current distance d is not limited, for example, when the vehicle is a car, the current distance determining module 204 can be configured to determine the current distance by reading the data in a CAN (Controller Area Network, controller area network ) bus, an LIN (Local Interconnect Network, local interconnect network) bus or a FlexRay bus

The collision avoidance decision making module 205 is configured to judge whether the current distance reaches the collision avoidance distance determined by the collision avoidance distance determining module 203, and if the judgment result is yes, judge that the collision avoidance condition is tenable.

Corresponding to the situation in which the collision avoidance distance determining module 203 sets the multiple or multilevel collision avoidance distances, the collision avoidance decision making module 205 can be further configured to pre-store the classification of the collision avoidance situations, and judge that the collision avoidance condition corresponding to the highest level collision avoidance condition among the satisfied collision avoidance conditions is tenable; or, the collision avoidance decision making module 205 can be configured to judge whether the current distance reaches at least one of the plurality of collision avoidance distances, and judge that the collision avoidance condition corresponding to the largest collision avoidance distance among the plurality of collision avoidance distances reached by the current distance is tenable.

In one example of the forward collision avoidance system of the vehicle not covered by the present invention, the system further includes a warning module configured to: when the collision avoidance condition is tenable, generate and send a warning signal to the driver to remind the driver to take collision avoidance measures.

In the present example, when the collision avoidance distance determining module 203 calculates the collision avoidance distance, various calculation formulas for calculating the collision avoidance distance corresponding to the collision avoidance warning in the step S103 in the foregoing example can be used, and the reaction time of the driver should be considered during the calculation.

The warning signal can include one or some of a sound warning signal, a voice warning signal, a graphic warning signal, an indicator light warning signal, and a human-machine interaction (HMI) warning signal.

Corresponding to the above situation of multiple or multilevel collision avoidance distances, the warning module is further configured to generate multiple or multilevel warning signals, and generate different warning signals according to the urgency of the driving information or the level of the warning signal, for example, gradually increase the volume of the warning sound according to the urgency, change the content of the voice prompt, increase the flashing frequency of the prompt light, and so on. The warning signal can be different based on the determined collision avoidance manner, for example, a sound signal and a text signal include the information of specific suggestions for collision avoidance. In addition, when the warning module sends the warning signal to the driver, the warning module can switch among different types of warning signals, different levels of warning signals, and stop warning.

In one example of the forward collision avoidance system of the vehicle, the system further includes an active collision avoidance module configured to: when the collision avoidance condition is tenable, generate and issue a collision avoidance instruction to the vehicle to control the vehicle to take collision avoidance measures according to the determined collision avoidance manner, wherein the collision avoidance instruction can include collision avoidance power parameter information corresponding to the collision avoidance manner.

In the present example, when the collision avoidance distance determining module 203 calculates the collision avoidance distance, various calculation formulas for calculating the collision avoidance distance corresponding to active collision avoidance in the embodiment of the foregoing step S103 can be used.

When the vehicle is a car, the active collision avoidance module can be specifically configured to perform active collision avoidance by controlling a braking actuator and/or a steering actuator according to the information contained in the collision avoidance instruction. Optionally, the active collision avoidance module can also be configured to assist the collision avoidance operation of the driver according to an active collision avoidance instruction, and adjust the collision avoidance manner and collision avoidance power parameters to smoothly perform collision avoidance; and the assistance of the collision avoidance operation of the driver can also be implemented in a human-computer interaction (HMI) manner.

In addition, the forward collision avoidance system of the vehicle in the present invention can be configured to perform multiple rounds of collision avoidance, each round of collision avoidance can include performing warning on the driver or performing active collision avoidance by the vehicle according to the steps of any foregoing embodiment, in order to adapt to the changes in traffic scenarios and to particularly adapt to the embodiments in which multiple or multilevel collision avoidance distances are set.

Further, the example further provides a controller, including a memory and a processor, wherein the memory stores a program, and the program, when executed by the processor, can implement the steps of any forward collision avoidance method of the vehicle described above. It should be understood that, instructions stored in the memory correspond to the steps of the specific example of the forward collision avoidance method of the vehicle that can be implemented by the instructions when the same is executed by the processor.

Further, the example further provides a computer-readable storage medium for storing computer instructions, and the instructions, when executed by a computer or a processor, can implement the steps of any forward collision avoidance method of the vehicle described above. It should be understood that, the instructions stored in the computer-readable storage medium correspond to the steps of the specific example of the forward collision avoidance method of the vehicle that can be implemented by the instructions when the same is executed.

## Claims

1. A forward collision avoidance method of a vehicle, wherein the speed of the vehicle is greater than the speed of a front obstacle, and the method comprises the following steps:

   determining the current speed of the vehicle and defining the same as a first speed, and determining the current speed of the front obstacle and defining the same as a second speed (S101);
   determining a collision avoidance manner to be adopted by the vehicle, wherein the collision avoidance manner comprises single braking collision avoidance, single steering collision avoidance, or a combination of braking collision avoidance and steering collision avoidance (S102);
   performing calculation according to the first speed, the second speed and the determined collision avoidance manner through a set operational formula to obtain a collision avoidance distance corresponding to the determined collision avoidance manner (S103);
   determining the current distance between the vehicle and the front obstacle (S104); and
   judging whether the current distance reaches the collision avoidance distance, and if the judgment result is yes, judging that a collision avoidance condition is tenable (S105),
   **characterized in that**,
   collision avoidance distances corresponding to the single braking collision avoidance and the single steering collision avoidance are respectively defined as a first collision avoidance distance ($d_1$) and a second collision avoidance distance ($d_2$), and
   wherein performing calculation through the set operational formula to obtain the collision avoidance distance corresponding to the determined collision avoidance manner (S103) comprises:
   when it is determined that the collision avoidance manner to be adopted is the combination of braking collision avoidance and steering collision avoidance, and:

   when the first speed is less than or equal to a set speed, determining the collision avoidance distance corresponding to the collision avoidance manner as the smaller one of the first collision avoidance distance ($d_1$) and the second collision avoidance distance ($d_2$); and
   when the first speed is greater than the set speed, determining the collision avoidance distance corresponding to the collision avoidance manner as the greater one of the first collision avoidance distance ($d_1$) and the second collision avoidance distance ($d_2$).

2. The forward collision avoidance method of the vehicle according to claim 1, wherein:

   the method further comprises: pre-storing different set speed intervals, wherein each of the set speed intervals corresponds to a collision avoidance manner; and
   determining the collision avoidance manner to be adopted by the vehicle (S102) comprises: judging the set speed interval into which the first speed falls, and determining the obtained collision avoidance manner corresponding to the first speed as the collision avoidance manner to be adopted by the vehicle.

3. The forward collision avoidance method of the vehicle according to claim 1, wherein determining the collision avoidance manner to be adopted by the vehicle (S102) comprises:

obtaining historical collision avoidance manners adopted by the driver in past collision avoidance behaviors, and the speeds of the vehicle corresponding to the past collision avoidance behaviors;

obtaining the historical collision avoidance manner of the driver at the same speed as the first speed among the past collision avoidance behaviors;

estimating an estimated collision avoidance manner to be adopted by the driver at the first speed according to the obtained historical collision avoidance manner; and

determining the estimated collision avoidance manner as the collision avoidance manner to be adopted by the vehicle.

4. The forward collision avoidance method of the vehicle according to claim 1, wherein:

the method further comprises: storing a critical speed, wherein the critical speed is the relative speed between the vehicle and the front obstacle, when the collision avoidance distances of the single braking collision avoidance and the single steering collision avoidance are equal;

wherein determining the collision avoidance manner to be adopted by the vehicle (S102) comprises:

obtaining the critical speed; and

if the determined current relative speed is less than the critical speed, determining the collision avoidance manner to be adopted by the vehicle as the braking collision avoidance, and

if the determined current relative speed is greater than or equal to the critical speed, determining the collision avoidance manner to be adopted by the vehicle as the steering collision avoidance.

5. The forward collision avoidance method of the vehicle according to claim 1, further comprising: when the collision avoidance condition is tenable, generating and sending a warning signal to the driver to remind the driver to take collision avoidance measures.

6. The forward collision avoidance method of the vehicle according to claim 5, wherein the reaction time of the driver is considered when the collision avoidance distance is calculated.

7. The forward collision avoidance method of the vehicle according to claim 5, wherein in the case of braking collision avoidance,

when the front obstacle is not in a preset working condition:

when the collision avoidance distance is calculated, the distance change between the vehicle and the front obstacle is reckoned in the reaction time of the driver,

wherein the preset working condition is that the front obstacle is in a decelerating state and stops before the vehicle.

8. The forward collision avoidance method of the vehicle according to claim 7, wherein,

the method further comprises: determining the relative acceleration between the vehicle and the obstacle;

wherein the collision avoidance distance is not less than a value obtained by a first calculation formula, the first calculation formula is:

$$\frac{-(v_{rel}+a_{rel}T_d)^2}{2a_{x,sv}} - T_d v_{rel} - \frac{1}{2} a_{rel} T_d{}^2,$$

wherein, $v_{rel}$ represents the relative speed between the vehicle and the front obstacle, $a_{rel}$ represents the relative acceleration, $a_{x,sv}$ represents a preset braking longitudinal deceleration of the vehicle, and $T_d$ represents the reaction time of the driver.

9. The forward collision avoidance method of the vehicle according to claim 7, wherein the method further comprises:

determining the longitudinal acceleration of the front obstacle; and

judging whether a first relational expression is tenable, wherein the first relational expression is:

EP 3 689 696 B1

$$T_d - \frac{v_{sv}}{a_{x,sv}} < \frac{-v_{pov}}{a_{x,pov}},$$

$v_{sv}$ represents the first speed, $v_{pov}$ represents the second speed, $a_{x,sv}$ represents the preset braking longitudinal deceleration of the vehicle, $a_{x,pov}$ represents the longitudinal acceleration of the front obstacle, $T_d$ represents the reaction time of the driver, and
if the judgment result is yes, judging that the front obstacle is not in the preset working condition.

10. The forward collision avoidance method of the vehicle according to claim 5, wherein,

the method further comprises: determining the longitudinal acceleration of the front obstacle; and
in the case of braking collision avoidance,
when the front obstacle is in the preset working condition:

when the collision avoidance distance is calculated, reckoning in an estimated displacement of the front obstacle, obtained from the second speed and the longitudinal acceleration of the front obstacle,
wherein the preset working condition is that the front obstacle is in the decelerating state and stops before the vehicle.

11. The forward collision avoidance method of the vehicle according to claim 10, wherein,

the collision avoidance distance is not less than a value obtained by a second calculation formula, the second calculation formula is:

$$\frac{-v_{sv}{}^2}{2a_{x,sv}} + \frac{v_{pov}{}^2}{2a_{x,pov}} - T_d v_{rel},$$

wherein, $v_{sv}$ represents the first speed, $v_{pov}$ represents the second speed, $a_{x,sv}$ represents the preset braking longitudinal deceleration of the vehicle, $a_{x,pov}$ represents the longitudinal acceleration of the front obstacle, $v_{rel}$ represents the relative speed between the vehicle and the front obstacle, and $T_d$ represents the reaction time of the driver.

12. The forward collision avoidance method of the vehicle according to claim 10, wherein the method further comprises:

judging whether a second relational expression is tenable, wherein the second relational expression is:

$$T_d - \frac{v_{sv}}{a_{x,sv}} \geq \frac{-v_{pov}}{a_{x,pov}},$$

$v_{sv}$ represents the first speed, $v_{pov}$ represents the second speed, $a_{x,sv}$ represents the preset braking longitudinal deceleration of the vehicle, $a_{x,pov}$ represents the longitudinal acceleration of the front obstacle, $T_d$ represents the reaction time of the driver, and
if the judgment result is yes, judging that the front obstacle is in the preset working condition.

13. The forward collision avoidance method of the vehicle according to claim 5, wherein, in the case of steering collision avoidance,
when the front obstacle is not in the preset working condition:

when the collision avoidance distance is calculated, the distance change between the vehicle and the front obstacle is reckoned in the reaction time of the driver,
wherein the preset working condition is that the front obstacle is in the decelerating state and stops before the vehicle.

22

**Patentansprüche**

1. Verfahren zur Vermeidung einer Frontalkollision eines Fahrzeugs, wobei die Geschwindigkeit des Fahrzeugs größer ist als die Geschwindigkeit eines vorderen Hindernisses und das Verfahren die folgenden Schritte aufweist:

   Bestimmen der aktuellen Geschwindigkeit des Fahrzeugs und Definieren derselben als eine erste Geschwindigkeit und Bestimmen der aktuellen Geschwindigkeit des vorderen Hindernisses und Definieren derselben als eine zweite Geschwindigkeit (S101);
   Bestimmen einer Kollisionsvermeidungsweise, die vom Fahrzeug anzuwenden ist, wobei die Kollisionsvermeidungsweise eine Kollisionsvermeidung durch einmaliges Bremsen, eine Kollisionsvermeidung durch einmaliges Lenken oder eine Kombination einer Kollisionsvermeidung durch Bremsen und einer Kollisionsvermeidung durch Lenken aufweist (S102);
   Durchführen einer Berechnung gemäß der ersten Geschwindigkeit, der zweiten Geschwindigkeit und der bestimmten Kollisionsvermeidungsweise über eine eingestellte Betriebsformel, um einen Kollisionsvermeidungsabstand zu erhalten, der der bestimmten Kollisionsvermeidungsweise entspricht (S103); Bestimmen des aktuellen Abstands zwischen dem Fahrzeug und dem vorderen Hindernis (S104) und
   Beurteilen, ob der aktuelle Abstand den Kollisionsvermeidungsabstand erreicht, und wenn das Beurteilungsergebnis ja ist, Beurteilen, dass ein Kollisionsvermeidungszustand tragbar ist (S105),
   **dadurch gekennzeichnet, dass**
   Kollisionsvermeidungsabstände, die der Kollisionsvermeidung durch einmaliges Bremsen und der Kollisionsvermeidung durch einmaliges Lenken entsprechen, jeweils als ein erster Kollisionsvermeidungsabstand ($d_1$) und ein zweiter Kollisionsvermeidungsabstand ($d_2$) definiert sind, und
   wobei das Durchführen einer Berechnung über die eingestellte Betriebsformel, um den Kollisionsvermeidungsabstand zu erhalten, der der bestimmten Kollisionsvermeidungsweise entspricht (S103), Folgendes aufweist:
   wenn bestimmt wird, dass die anzuwendende Kollisionsvermeidungsweise die Kombination einer Kollisionsvermeidung durch Bremsen und einer Kollisionsvermeidung durch Lenken ist, und:

   wenn die erste Geschwindigkeit kleiner als oder gleich einer eingestellten Geschwindigkeit ist, Bestimmen des Kollisionsvermeidungsabstands, der der Kollisionsvermeidungsweise entspricht, als den kleineren des ersten Kollisionsvermeidungsabstands ($d_1$) und des zweiten Kollisionsvermeidungsabstands ($d_2$); und
   wenn die erste Geschwindigkeit größer als eine eingestellte Geschwindigkeit ist, Bestimmen des Kollisionsvermeidungsabstands, der der Kollisionsvermeidungsweise entspricht, als den größeren des ersten Kollisionsvermeidungsabstands ($d_1$) und des zweiten Kollisionsvermeidungsabstands ($d_2$).

2. Verfahren zur Vermeidung einer Frontalkollision des Fahrzeugs nach Anspruch 1, wobei:

   das Verfahren ferner Folgendes aufweist: Vorabspeichern von verschiedenen eingestellten Geschwindigkeitsintervallen, wobei jedes der eingestellten Geschwindigkeitsintervalle einer Kollisionsvermeidungsweise entspricht; und
   das Bestimmen der vom Fahrzeug anzuwendenden Kollisionsvermeidungsweise (S102) Folgendes aufweist: Beurteilen des eingestellten Geschwindigkeitsintervalls, in das die erste Geschwindigkeit fällt, und Bestimmen der erhaltenen Kollisionsvermeidungsweise, die der ersten Geschwindigkeit entspricht, als die vom Fahrzeug anzuwendende Kollisionsvermeidungsweise.

3. Verfahren zur Vermeidung einer Frontalkollision des Fahrzeugs nach Anspruch 1, wobei das Bestimmen der vom Fahrzeug anzuwendenden Kollisionsvermeidungsweise (S102) Folgendes aufweist:

   Erhalten von historischen Kollisionsvermeidungsweisen, die vom Fahrer bei vorherigen Kollisionsvermeidungsverhalten angewendet wurden, und der Geschwindigkeiten des Fahrzeugs, die den vorherigen Kollisionsvermeidungsverhalten entsprechen;
   Erhalten der historischen Kollisionsvermeidungsweise des Fahrers mit derselben Geschwindigkeit wie die erste Geschwindigkeit bei vorherigen Kollisionsvermeidungsverhalten;
   Schätzen einer geschätzten Kollisionsvermeidungsweise, die gemäß der erhaltenen historischen Kollisionsvermeidungsweise vom Fahrer bei der ersten Geschwindigkeit anzuwenden ist; und
   Bestimmen der geschätzten Kollisionsvermeidungsweise als die vom Fahrzeug anzuwendende Kollisionsvermeidungsweise.

4. Verfahren zur Vermeidung einer Frontalkollision des Fahrzeugs nach Anspruch 1, wobei:

das Verfahren ferner Folgendes aufweist: Speichern einer kritischen Geschwindigkeit, wobei die kritische Geschwindigkeit die relative Geschwindigkeit zwischen dem Fahrzeug und dem vorderen Hindernis ist, wenn die Kollisionsvermeidungsabstände der Kollisionsvermeidung durch einmaliges Bremsen und der Kollisionsvermeidung durch einmaliges Lenken gleich sind;

wobei das Bestimmen der vom Fahrzeug anzuwendenden Kollisionsvermeidungsweise (S102) Folgendes aufweist:

Erhalten der kritischen Geschwindigkeit und

wenn die bestimmte aktuelle relative Geschwindigkeit kleiner ist als die kritische Geschwindigkeit, Bestimmen der Kollisionsvermeidungsweise, die vom Fahrzeug anzuwenden ist, als die Kollisionsvermeidung durch Bremsen und

wenn die bestimmte aktuelle relative Geschwindigkeit größer als oder gleich der kritischen Geschwindigkeit ist, Bestimmen der Kollisionsvermeidungsweise, die vom Fahrzeug anzuwenden ist, als die Kollisionsvermeidung durch Lenken.

5. Verfahren zur Vermeidung einer Frontalkollision des Fahrzeugs nach Anspruch 1, das ferner Folgendes aufweist: wenn der Kollisionsvermeidungszustand tragbar ist, Erzeugen und Senden eines Warnsignals an den Fahrer, um den Fahrer daran zu erinnern, Kollisionsvermeidungsmaßnahmen zu ergreifen.

6. Verfahren zur Vermeidung einer Frontalkollision des Fahrzeugs nach Anspruch 5, wobei die Reaktionszeit des Fahrers beim Berechnen des Kollisionsvermeidungsabstands berücksichtigt wird.

7. Verfahren zur Vermeidung einer Frontalkollision des Fahrzeugs nach Anspruch 5, wobei im Falle einer Kollisionsvermeidung durch Bremsen, wenn sich das vordere Hindernis nicht in einem voreingestellten Arbeitszustand befindet:

wenn der Kollisionsvermeidungsabstand berechnet wird, die Abstandsänderung zwischen dem Fahrzeug und dem vorderen Hindernis in die Reaktionszeit des Fahrers eingerechnet wird,
wobei der voreingestellte Arbeitszustand der ist, dass sich das vordere Hindernis in einem Verzögerungsstatus befindet und vor dem Fahrzeug stoppt.

8. Verfahren zur Vermeidung einer Frontalkollision des Fahrzeugs nach Anspruch 7, wobei,

das Verfahren ferner Folgendes aufweist: Bestimmen der relativen Beschleunigung zwischen dem Fahrzeug und dem Hindernis;
wobei der Kollisionsvermeidungsabstand nicht kleiner ist als ein Wert, der über eine erste Berechnungsformel erhalten wird, wobei die erste Berechnungsformel folgende ist:

$$\frac{-(v_{rel}+a_{rel}T_d)^2}{2a_{x,sv}} - T_d v_{rel} - \frac{1}{2}a_{rel}T_d{}^2,$$

wobei $v_{rel}$ die relative Geschwindigkeit zwischen dem Fahrzeug und dem vorderen Hindernis repräsentiert, $a_{rel}$ die relative Beschleunigung repräsentiert, $a_{x,sv}$ eine voreingestellte Längsverzögerung durch Bremsen des Fahrzeugs repräsentiert und $T_d$ die Reaktionszeit des Fahrers repräsentiert.

9. Verfahren zur Vermeidung einer Frontalkollision des Fahrzeugs nach Anspruch 7, wobei das Verfahren ferner Folgendes aufweist:

Bestimmen der Längsbeschleunigung des vorderen Hindernisses und
Beurteilen, ob ein erster relationaler Ausdruck tragbar ist, wobei der erste relationale Ausdruck folgender ist:

$$T_d - \frac{v_{sv}}{a_{x,sv}} < \frac{-v_{pov}}{a_{x,pov}},$$

wobei $v_{sv}$ die erste Geschwindigkeit repräsentiert, $v_{pov}$ die zweite Geschwindigkeit repräsentiert, $a_{x,sv}$ die voreingestellte Längsverzögerung durch Bremsen des Fahrzeugs repräsentiert, $a_{x,pov}$ die Längsbeschleunigung

des vorderen Hindernisses repräsentiert, $T_d$ die Reaktionszeit des Fahrers repräsentiert, und
wenn das Beurteilungsergebnis ja ist, Beurteilen, dass sich das vordere Hindernis nicht im voreingestellten Arbeitszustand befindet.

10. Verfahren zur Vermeidung einer Frontalkollision des Fahrzeugs nach Anspruch 5, wobei,

das Verfahren ferner Folgendes aufweist: Bestimmen der Längsbeschleunigung des vorderen Hindernisses und im Falle einer Kollisionsvermeidung durch Bremsen,
wenn sich das vordere Hindernis im voreingestellten Arbeitszustand befindet:

wenn der Kollisionsvermeidungsabstand berechnet wird, Einrechnen eines geschätzten Versatzes des vorderen Hindernisses, der aus der zweiten Geschwindigkeit und der Längsbeschleunigung des vorderen Hindernisses erhalten wird,
wobei der voreingestellte Arbeitszustand der ist, dass sich das vordere Hindernis im Verzögerungsstatus befindet und vor dem Fahrzeug stoppt.

11. Verfahren zur Vermeidung einer Frontalkollision des Fahrzeugs nach Anspruch 10, wobei,

der Kollisionsvermeidungsabstand nicht kleiner ist als ein Wert, der über eine zweite Berechnungsformel erhalten wird, wobei die zweite Berechnungsformel folgende ist:

$$\frac{-v_{sv}{}^2}{2a_{x,sv}} + \frac{v_{pov}{}^2}{2a_{x,pov}} - T_d v_{rel},$$

wobei $v_{sv}$ die erste Geschwindigkeit repräsentiert, $v_{pov}$ die zweite Geschwindigkeit repräsentiert, $a_{x,sv}$ die voreingestellte Längsverzögerung durch Bremsen des Fahrzeugs repräsentiert, $a_{x,pov}$ die Längsbeschleunigung des vorderen Hindernisses repräsentiert, $v_{rel}$ die relative Geschwindigkeit zwischen dem Fahrzeug und dem vorderen Hindernis repräsentiert und $T_d$ die Reaktionszeit des Fahrers repräsentiert.

12. Verfahren zur Vermeidung einer Frontalkollision des Fahrzeugs nach Anspruch 10, wobei das Verfahren ferner Folgendes aufweist:

Beurteilen, ob ein zweiter relationaler Ausdruck tragbar ist, wobei der zweite relationale Ausdruck folgender ist:

$$T_d - \frac{v_{sv}}{a_{x,sv}} \geq \frac{-v_{pov}}{a_{x,pov}},$$

wobei $v_{sv}$ die erste Geschwindigkeit repräsentiert, $v_{pov}$ die zweite Geschwindigkeit repräsentiert, $a_{x,sv}$ die voreingestellte Längsverzögerung durch Bremsen des Fahrzeugs repräsentiert, $a_{x,pov}$ die Längsbeschleunigung des vorderen Hindernisses repräsentiert, $T_d$ die Reaktionszeit des Fahrers repräsentiert, und
wenn das Beurteilungsergebnis ja ist, Beurteilen, dass sich das vordere Hindernis im voreingestellten Arbeitszustand befindet.

13. Verfahren zur Vermeidung einer Frontalkollision des Fahrzeugs nach Anspruch 5, wobei im Falle einer Kollisionsvermeidung durch Lenken,
wenn sich das vordere Hindernis nicht im voreingestellten Arbeitszustand befindet:

wenn der Kollisionsvermeidungsabstand berechnet wird, die Abstandsänderung zwischen dem Fahrzeug und dem vorderen Hindernis in die Reaktionszeit des Fahrers eingerechnet wird,
wobei der voreingestellte Arbeitszustand der ist, dass sich das vordere Hindernis im Verzögerungsstatus befindet und vor dem Fahrzeug stoppt.

**Revendications**

1. Procédé d'évitement de collision frontale d'un véhicule, dans lequel la vitesse du véhicule est supérieure à la vitesse d'un obstacle à l'avant, et le procédé comprend les étapes suivantes :

   la détermination de la vitesse actuelle du véhicule et la définition de celle-ci en tant que première vitesse, et la détermination de la vitesse actuelle de l'obstacle à l'avant et la définition de celle-ci en tant que seconde vitesse (S101) ;
   la détermination d'une manière d'évitement de collision devant être adoptée par le véhicule, dans lequel la manière d'évitement de collision comprend un évitement de collision par freinage seul, un évitement de collision par braquage seul, ou une association d'évitement de collision par freinage et d'évitement de collision par braquage (S102) ;
   la réalisation d'un calcul selon la première vitesse, la seconde vitesse et la manière d'évitement de collision déterminée par l'intermédiaire d'une formule opérationnelle définie pour obtenir une distance d'évitement de collision correspondant à la manière d'évitement de collision déterminée (S103) ;
   la détermination de la distance actuelle entre le véhicule et l'obstacle à l'avant (S104) ; et
   l'évaluation du fait que la distance actuelle atteint, ou n'atteint pas, la distance d'évitement de collision, et si le résultat d'évaluation est affirmatif, l'évaluation qu'un évitement de collision condition est possible (S105), **caractérisé en ce que**
   des distances d'évitement de collision correspondant à l'évitement de collision par freinage seul et l'évitement de collision par braquage seul sont respectivement définies en tant que première distance d'évitement de collision ($d_1$) et seconde distance d'évitement de collision ($d_2$), et
   dans lequel la réalisation d'un calcul par l'intermédiaire de la formule opérationnelle définie pour obtenir la distance d'évitement de collision correspondant à la manière d'évitement de collision déterminée (S103) comprend :
   lorsqu'il est déterminé que la manière d'évitement de collision devant être adoptée est l'association d'évitement de collision par freinage et d'évitement de collision par braquage, et :

   lorsque la première vitesse est inférieure ou égale à une vitesse définie, la détermination de la distance d'évitement de collision correspondant à la manière d'évitement de collision comme étant une plus petite de la première distance d'évitement de collision ($d_1$) et de la seconde distance d'évitement de collision ($d_2$) ; et
   lorsque la première vitesse est supérieure à la vitesse définie, la détermination de la distance d'évitement de collision correspondant à la manière d'évitement de collision comme étant une plus grande de la première distance d'évitement de collision ($d_1$) et de la seconde distance d'évitement de collision ($d_2$).

2. Procédé d'évitement de collision frontale du véhicule selon la revendication 1, dans lequel :

   le procédé comprend en outre : le pré-stockage de différents intervalles de vitesse définie, dans lequel chacun des intervalles de vitesse définie correspond à une manière d'évitement de collision ; et
   la détermination de la manière d'évitement de collision devant être adoptée par le véhicule (S102) comprend :
   l'évaluation de l'intervalle de vitesse définie dans lequel la première vitesse se trouve, et la détermination de la manière d'évitement de collision obtenue correspondant à la première vitesse comme étant la manière d'évitement de collision devant être adoptée par le véhicule.

3. Procédé d'évitement de collision frontale du véhicule selon la revendication 1, dans lequel la détermination de la manière d'évitement de collision devant être adoptée par le véhicule (S102) comprend :

   l'obtention de manières d'évitement de collision historiques adoptées par le conducteur dans des comportements d'évitement de collision passés, et des vitesses du véhicule correspondant aux comportements d'évitement de collision passés ;
   l'obtention de la manière d'évitement de collision historique du conducteur à la même vitesse que la première vitesse parmi les comportements d'évitement de collision passés ;
   l'estimation d'une manière d'évitement de collision estimée devant être adoptée par le conducteur à la première vitesse selon la manière d'évitement de collision historique obtenue ; et
   la détermination de la manière d'évitement de collision estimée comme étant la manière d'évitement de collision devant être adoptée par le véhicule.

**4.** Procédé d'évitement de collision frontale du véhicule selon la revendication 1, dans lequel :

le procédé comprend en outre : le stockage d'une vitesse critique, dans lequel la vitesse critique est la vitesse relative entre le véhicule et l'obstacle à l'avant, lorsque les distances d'évitement de collision de l'évitement de collision par freinage seul et de l'évitement de collision par braquage seul sont égales ;
dans lequel la détermination de la manière d'évitement de collision devant être adoptée par le véhicule (S102) comprend :

l'obtention de la vitesse critique ; et
si la vitesse relative actuelle déterminée est inférieure à la vitesse critique, la détermination de la manière d'évitement de collision devant être adoptée par le véhicule comme étant l'évitement de collision par freinage, et
si la vitesse relative actuelle déterminée est supérieure ou égale à la vitesse critique, la détermination de la manière d'évitement de collision devant être adoptée par le véhicule comme étant l'évitement de collision par braquage.

**5.** Procédé d'évitement de collision frontale du véhicule selon la revendication 1, comprenant en outre : lorsque la condition d'évitement de collision est possible, la génération et l'envoi d'un signal d'avertissement au conducteur pour rappeler au conducteur de prendre des mesures d'évitement de collision.

**6.** Procédé d'évitement de collision frontale du véhicule selon la revendication 5, dans lequel le temps de réaction du conducteur est considéré lorsque la distance d'évitement de collision est calculée.

**7.** Procédé d'évitement de collision frontale du véhicule selon la revendication 5, dans lequel, dans le cas de évitement de collision par freinage,
lorsque l'obstacle à l'avant n'est pas dans une condition de fonctionnement prédéfinie :

lorsque la distance d'évitement de collision est calculée, le changement de distance entre le véhicule et l'obstacle à l'avant est pris en compte dans le temps de réaction du conducteur,
dans lequel la condition de fonctionnement prédéfinie est que l'obstacle à l'avant est dans un état de ralentissement et s'arrête avant le véhicule.

**8.** Procédé d'évitement de collision frontale du véhicule selon la revendication 7, dans lequel,

le procédé comprend en outre : la détermination de l'accélération relative entre le véhicule et l'obstacle ;
dans lequel la distance d'évitement de collision n'est pas inférieure à une valeur obtenue par une première formule de calcul, la première formule de calcul est :

$$\frac{-(v_{rel} + a_{rel}T_d)^2}{2a_{x,sv}} - T_d v_{rel} - \frac{1}{2}a_{rel}T_d{}^2$$

$v_{rel}$ représentant la vitesse relative entre le véhicule et l'obstacle à l'avant, $a_{rel}$ représentant l'accélération relative, $a_{x,sv}$ représentant un ralentissement longitudinal par freinage prédéfini du véhicule, et $T_d$ représentant le temps de réaction du conducteur.

**9.** Procédé d'évitement de collision frontale du véhicule selon la revendication 7, dans lequel le procédé comprend en outre :

la détermination de l'accélération longitudinale de l'obstacle à l'avant ; et
l'évaluation du fait qu'une première expression relationnelle est, ou n'est pas, possible, dans lequel la première expression relationnelle est :

$$T_d - \frac{v_{sv}}{a_{x,sv}} < \frac{-v_{pov}}{a_{x,pov}}$$

$v_{sv}$ représentant la première vitesse, $v_{pov}$ représentant la seconde vitesse, $a_{x,sv}$ représentant le ralentissement longitudinal par freinage prédéfini du véhicule, $a_{x,pov}$ représentant l'accélération longitudinale de l'obstacle à l'avant, $T_d$ représentant le temps de réaction du conducteur, et

si le résultat d'évaluation est affirmatif, l'évaluation que l'obstacle à l'avant n'est pas dans la condition de fonctionnement prédéfinie.

10. Procédé d'évitement de collision frontale du véhicule selon la revendication 5, dans lequel,

le procédé comprend en outre : la détermination de l'accélération longitudinale de l'obstacle à l'avant ; et
dans le cas d'un évitement de collision par freinage,
lorsque l'obstacle à l'avant est dans la condition de fonctionnement prédéfinie :

lorsque la distance d'évitement de collision est calculée, la prise en compte d'un déplacement estimé de l'obstacle à l'avant, obtenu à partir de la seconde vitesse et de l'accélération longitudinale de l'obstacle à l'avant,
dans lequel la condition de fonctionnement prédéfinie est que l'obstacle à l'avant est dans l'état de ralentissement et s'arrête avant le véhicule.

11. Procédé d'évitement de collision frontale du véhicule selon la revendication 10, dans lequel,

la distance d'évitement de collision n'est pas inférieure à une valeur obtenue par une seconde formule de calcul, la seconde formule de calcul est :

$$\frac{-v_{sv}^{\;2}}{2a_{x,sv}} + \frac{v_{pov}^{\;2}}{2a_{x,pov}} - T_d v_{rel}$$

$v_{sv}$ représentant la première vitesse, $v_{pov}$ représentant la seconde vitesse, $a_{x,sv}$ représentant le ralentissement longitudinal par freinage prédéfini du véhicule, $a_{x,pov}$ représentant l'accélération longitudinale de l'obstacle à l'avant, $v_{rel}$ représentant la vitesse relative entre le véhicule et l'obstacle à l'avant, et $T_d$ représentant le temps de réaction du conducteur.

12. Procédé d'évitement de collision frontale du véhicule selon la revendication 10, dans lequel le procédé comprend en outre :

l'évaluation du fait qu'une seconde expression relationnelle est, ou n'est pas, possible, dans lequel la seconde expression relationnelle est :

$$T_d - \frac{v_{sv}}{a_{x,sv}} \geq \frac{-v_{pov}}{a_{x,pov}}$$

$v_{sv}$ représentant la première vitesse, $v_{pov}$ représentant la seconde vitesse, $a_{x,sv}$ représentant le ralentissement longitudinal par freinage prédéfini du véhicule, $a_{x,pov}$ représentant l'accélération longitudinale de l'obstacle à l'avant, $T_d$ représentant le temps de réaction du conducteur, et
si le résultat d'évaluation est affirmatif, l'évaluation que l'obstacle à l'avant est dans la condition de fonctionnement prédéfinie.

13. Procédé d'évitement de collision frontale du véhicule selon la revendication 5, dans lequel, dans le cas de évitement de collision par braquage,
lorsque l'obstacle à l'avant n'est pas dans la condition de fonctionnement prédéfinie :

lorsque la distance d'évitement de collision est calculée, le changement de distance entre le véhicule et l'obstacle à l'avant est pris en compte dans le temps de réaction du conducteur,
dans lequel la condition de fonctionnement prédéfinie est que l'obstacle à l'avant est dans l'état de ralentissement et s'arrête avant le véhicule.

determining driving information, including determining the current speed of the vehicle and defining the same as a first speed, and determining the current speed of the front obstacle and defining the same as a second speed — S101

determining a collision avoidance manner to be adopted by the vehicle, wherein the collision avoidance manner includes single braking collision avoidance, single steering collision avoidance, or a combination of braking collision avoidance and steering collision avoidance — S102

performing calculation according to the first speed, the second speed and the determined collision avoidance manner through a set operational formula to obtain a collision avoidance distance corresponding to the determined collision avoidance manner — S103

determining the current distance between the vehicle and the front obstacle — S104

judging whether the current distance reaches the collision avoidance distance, and if the judgment result is yes, judging that a collision avoidance condition is tenable — S105

Fig. 1

Fig. 2

Fig. 3A

30

The distance between the
vehicle and the obstacle

First collision
avoidance distance

Second collision
avoidance distance

Relative speed

Fig. 3B

The distance between the
vehicle and the obstacle

First collision
avoidance distance

Second collision
avoidance distance

Relative speed

Fig. 3C

Fig. 4

Forward collision avoidance system 200 of vehicle

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1418104 A2